# EUROPEAN PATENT APPLICATION

(11) **EP 4 516 571 A1**
(43) Date of publication of application: **05.03.2025**
(21) Application number: 23902816.0
(22) Date of filing: 15.12.2023
(51) Int. Cl.: B60L 50/64, B62J 43/20, A01D 34/64, H02J 7/00

(54) **ELECTRIC ALL-TERRAIN VEHICLE**

(30) Priority: 15.12.2022 CN 202211614144
(71) Applicant: Nanjing Chervon Industry Co., Ltd., Nanjing, Jiangsu 211106 (CN)
(72) Inventor: XU, Yanqing, Nanjing, Jiangsu 211106 (CN); HUANG, Jiajun, Nanjing, Jiangsu 211106 (CN); HUANG, Cunrong, Nanjing, Jiangsu 211106 (CN); KAN, Yuchao, Nanjing, Jiangsu 211106 (CN); XU, Haishen, Nanjing, Jiangsu 211106 (CN)
(74) Representative: Sun, Yiming
(86) International application number: PCT/CN2023/139022
(87) International publication number: WO 2024/125623

(57) **Abstract**

Provided is an electric all-terrain vehicle. The electric all-terrain vehicle includes a vehicle frame; a seat used for a user to sit on and mounted to the vehicle frame; a traveling wheel set supporting the vehicle frame and including front wheels and rear wheels; a driving system for driving the traveling wheel set; and a power supply assembly including an energy storage device and used for supplying electric power to at least the driving system. The energy storage device is detachably mounted to the vehicle frame, and the energy storage device is further configured to be detachable from the vehicle frame to supply power to a power tool.

## Description

This application claims priority to Chinese Patent Application No. 202211614144.7 filed with the China National Intellectual Property Administration (CNIPA) on Dec. 15, 2022, the disclosure of which is incorporated herein by reference in its entirety.

### TECHNICAL FIELD

The present application relates to the technical field of vehicles, for example, an electric all-terrain vehicle.

### BACKGROUND

With the development of the all-terrain vehicle industry, all-terrain vehicles are well applied in agriculture, forestry, animal husbandry, and special road conditions. Traditional all-terrain vehicles generally use gasoline or diesel, and the exhaust and noise during operation affect the environment. In addition, traditional all-terrain vehicles have complex structures and high maintenance costs. Therefore, currently, electric all-terrain vehicles appear.

For the electric all-terrain vehicles, great power and long-lasting endurance are two of the issues that the user is most concerned about. How to balance the two has always been the development direction of the industry.

This part provides background information related to the present application, and the background information is not necessarily the existing art.

### SUMMARY

An object of the present application is to solve or at least alleviate part or all of the preceding problems. The present application provides an electric all-terrain vehicle. The electric all-terrain vehicle includes a vehicle frame; a seat used for a user to sit on and mounted to the vehicle frame; a traveling wheel set supporting the vehicle frame and including front wheels and rear wheels; a driving system for driving the traveling wheel set; and a power supply assembly including an energy storage device and used for supplying electric power to at least the driving system. The energy storage device is detachably mounted to the vehicle frame, and the energy storage device is further configured to be detachable from the vehicle frame to supply power to a power tool.

In an example, the electric all-terrain vehicle further includes a trunk capable of accommodating the power tool.

In an example, the energy storage device includes cell units, and the cell unit is one of a lithium iron phosphate battery, a ternary lithium battery, and a lead-acid battery.

In an example, the energy storage device is at least partially disposed below the seat.

In an example, the energy storage device includes first battery packs, and at least two first battery packs are connected in series for discharge.

In an example, the discharge voltage of the power supply assembly is greater than or equal to 80 V.

In an example, the energy storage device further includes second battery packs, and the first battery packs and the second battery packs are different.

In an example, at least one of chemical properties, rated voltages, rated capacities, charge and discharge rates, and operating temperatures of the first battery packs and the second battery packs are different.

In an example, the rated voltage of the first battery pack is greater than or equal to 40 V, the first battery packs belong to a first power platform and supply power to a wheeled power tool, and the wheeled power tool includes a riding mower, a tractor, and a push garden tool.

In an example, the rated voltage of the second battery pack is less than or equal to 24 V, the second battery packs belong to a second power platform and supply power to a handheld power tool, and the handheld power tool includes a string trimmer, a hedge trimmer, a blower, a chainsaw, an electric drill, an electric hammer, an electric saw, an angle grinder, and a sander.

In the electric all-terrain vehicle provided in the present application, the energy storage device of the power supply assembly is reasonably planned. In addition to supplying power to the vehicle, the energy storage device is flexibly detachable to supply power to the power tool, thereby bringing convenience to the user in using electricity.

The object of the present application is to provide an electric all-terrain vehicle. The electric all-terrain vehicle includes a vehicle frame; a seat used for a user to sit on and mounted to the vehicle frame; a traveling wheel set supporting the vehicle frame and including front wheels and rear wheels; a driving system for driving the traveling wheel set; a power supply assembly including an energy storage device and used for supplying electric power to at least the driving system; an operating assembly for the user to operate to control at least the speed and the direction of the electric all-terrain vehicle; and a vehicle control unit (VCU) electrically connected to the operating assembly. The driving system includes a first drive motor and a second drive motor, and the VCU is configured to distribute torque to the first drive motor and the second drive motor according to a principle of optimal efficiency so that the total efficiency of the first drive motor and the second drive motor is greater than or equal to 70% in at least 70% of a torque range.

In an example, the electric all-terrain vehicle further includes a first controller for driving the first drive motor and a second controller for driving the second drive motor, where the VCU is electrically connected to the first controller and the second controller and distributes the torque to the first controller and the second controller.

In an example, the VCU queries a torque distribution coefficient according to the vehicle speed and required torque of the electric all-terrain vehicle in a table lookup method.

In an example, the torque distribution coefficient maximizes the total efficiency of the first drive motor and the second drive motor.

In an example, the first drive motor and the second drive motor are different.

In an example, the first drive motor drives the front wheels, and the second drive motor drives the rear wheels.

In an example, the first controller and the second controller adopt one of direct torque control, vector control, and square wave control.

In an example, the second drive motor is a permanent magnet synchronous motor or an asynchronous motor.

In an example, the first drive motor is a permanent magnet synchronous motor or an asynchronous motor.

In an example, the VCU is disposed between a first controller and a second controller.

In the electric all-terrain vehicle provided in the present application, through the configuration of two electric motors and a reasonable torque distribution algorithm, the total efficiency of the first drive motor and the second drive motor is greater than or equal to 70% in at least 70% of the torque range, thereby improving the energy utilization efficiency of the vehicle and balancing the user requirements for strong power and long-lasting endurance.

The object of the present application is to provide an electric all-terrain vehicle. The electric all-terrain vehicle includes a vehicle frame; a seat used for a user to sit on and mounted to the vehicle frame; a traveling wheel set supporting the vehicle frame and including front wheels and rear wheels; a suspension assembly dynamically connecting the vehicle frame to the traveling wheel set and used for absorbing shocks for the electric all-terrain vehicle; a driving system for driving the traveling wheel set; and a power supply assembly including an energy storage device and used for supplying electric power to at least the driving system. The driving system includes a first drive motor and a second drive motor. The first drive motor drives the front wheels, the second drive motor drives the rear wheels, and the first drive motor and the second drive motor are different.

In an example, the second drive motor is a permanent magnet synchronous motor or an asynchronous motor.

In an example, the first drive motor is a permanent magnet synchronous motor or an asynchronous motor.

In an example, the maximum output power of the first drive motor is greater than or equal to 10 kW, and the maximum output power of the second drive motor is greater than or equal to 20 kW.

In an example, the ratio of the rated output power of the second drive motor to the rated output power of the first drive motor is greater than or equal to 1.2 and less than or equal to 1.8.

In an example, the electric all-terrain vehicle further includes a VCU and an operating assembly for the user to operate to control at least the speed and the direction of the electric all-terrain vehicle.

In an example, the electric all-terrain vehicle further includes a first controller for driving the first drive motor and a second controller for driving the second drive motor, where the VCU is electrically connected to the first controller and the second controller and distributes required torque to the first controller and the second controller.

In an example, the first controller and the second controller adopt one of direct torque control, vector control, and square wave control.

In an example, the energy storage device includes multiple first battery packs, and at least two first battery packs are connected in series for discharge.

In an example, the rated voltage of the first battery pack is greater than or equal to 40 V.

In the electric all-terrain vehicle provided in the present application, through the differentiated configurations of two electric motors and a reasonable torque distribution algorithm, the energy utilization efficiency of the vehicle can be improved and the user requirements for strong power and long-lasting endurance can be balanced.

The object of the present application is to provide an electric all-terrain vehicle. The electric all-terrain vehicle includes a vehicle frame; a seat used for a user to sit on and mounted to the vehicle frame; a trunk disposed behind the seat and used for carrying an item; a traveling wheel set supporting the vehicle frame and including front wheels and rear wheels; a suspension assembly dynamically connecting the vehicle frame to the traveling wheel set and used for absorbing shocks for the electric all-terrain vehicle; a driving system for driving the traveling wheel set; and a power supply assembly including an energy storage device and used for supplying electric power to at least the driving system. The energy storage device includes first battery packs and second battery packs, the first battery pack includes cell units, and the cell unit is a lithium iron phosphate battery.

In an example, the first battery packs or the second battery packs are disposed below the seat.

In an example, the first battery packs or the second battery packs are disposed between the seat and the trunk.

In an example, the first battery packs or the second battery packs are disposed below the trunk.

In an example, the first battery packs or the second battery packs are disposed on two sides of the vehicle frame.

In an example, the rated voltage of the first battery pack is greater than or equal to 40 V, the first battery packs belong to a first power platform and supply power to a wheeled power tool, and the wheeled power tool includes a riding mower, a tractor, and a push garden tool.

In an example, the rated voltage of the second battery pack is less than or equal to 24 V, the second battery packs belong to a second power platform and supply power to a handheld power tool, and the handheld power tool includes a string trimmer, a hedge trimmer, a blower, a chainsaw, an electric drill, an electric hammer, an electric saw, an angle grinder, and a sander.

In an example, the energy storage device is configured to be a built-in cell module.

In an example, at least two first battery packs are connected in series for discharge.

In an example, the total voltage of at least two second battery packs connected in series reaches the rated voltage of the first battery pack.

The electric all-terrain vehicle provided in the present application uses a lithium iron phosphate battery pack, which is safer and more economical; and the use of different types of battery packs is conducive to increasing the service life and reducing usage costs.

The object of the present application is to provide an electric all-terrain vehicle. The electric all-terrain vehicle includes a vehicle frame; a seat used for a user to sit on and mounted to the vehicle frame; a trunk disposed behind the seat and used for carrying an item; a traveling wheel set supporting the vehicle frame and including front wheels and rear wheels; a suspension assembly dynamically connecting the vehicle frame to the traveling wheel set and used for absorbing shocks for the electric all-terrain vehicle; a driving system used for driving the traveling wheel set and including a front drive motor and a rear drive motor; and a power supply assembly including an energy storage device and used for supplying electric power to at least the driving system. The energy storage device is disposed between the front drive motor and the rear drive motor.

In an example, the energy storage device includes first battery packs, and the first battery packs are disposed below the seat.

In an example, the energy storage device further includes second battery packs, and the second battery packs and the first battery packs are different in at least one operating parameter.

In an example, the second battery packs are disposed at a position different from a position where the first battery packs are disposed.

In an example, the first battery packs or the second battery packs are configured to be detachable from the electric all-terrain vehicle to supply power to a power tool.

In an example, the first battery packs are configured to charge the second battery packs.

In an example, the energy storage device further includes a built-in cell module, and the built-in cell module is nondetachable.

In an example, the electric all-terrain vehicle further includes a direct current (DC) output interface for charging a DC device.

In an example, the DC output interface has a communication function.

In an example, the electric all-terrain vehicle further includes an alternating current (AC) output interface for supplying power to an AC device.

In the electric all-terrain vehicle provided in the present application, through the configuration of two electric motors and a reasonable position of the energy storage device, the component position arrangement and energy utilization efficiency of the vehicle can be optimized.

An object of the present application is to solve or at least alleviate part or all of the preceding problems. For this reason, the object of the present application is to provide an electric all-terrain vehicle. The electric all-terrain vehicle includes a vehicle frame; a seat used for a user to sit on and mounted to the vehicle frame; a trunk disposed behind the seat and used for carrying an item; a traveling wheel set supporting the vehicle frame and including front wheels and rear wheels; a suspension assembly dynamically connecting the vehicle frame to the traveling wheel set and used for absorbing shocks for the electric all-terrain vehicle; a driving system for driving the traveling wheel set; a power supply assembly including an energy storage device and used for supplying electric power to at least the driving system; a controller for controlling at least the driving system; and a wireless networking module powered by the power supply assembly and wirelessly connected to a remote device.

In an example, the wireless networking module is a Bluetooth device.

In an example, the wireless networking module is a wireless network card.

In an example, the electric all-terrain vehicle is configured to communicate with a cloud server via the wireless networking module.

In an example, the electric all-terrain vehicle further includes an over-the-air (OTA) upgrade client, where the OTA upgrade client acquires an upgrade package from the cloud server to update the controller.

In an example, the electric all-terrain vehicle further includes an OTA upgrade client, where the OTA upgrade client acquires an upgrade package from the remote device to update the controller.

In an example, the energy storage device includes first battery packs and second battery packs.

In an example, the first battery packs supply electric power to the driving system, and the second battery packs supply power to the controller and the wireless networking module.

In an example, the rated voltage of the first battery pack is greater than or equal to 40 V, the first battery packs belong to a first power platform and supply power to a wheeled power tool, and the wheeled power tool includes a riding mower, a tractor, and a push garden tool.

In an example, the rated voltage of the second battery pack is less than or equal to 24 V, the second battery packs belong to a second power platform and supply power to a handheld power tool, and the handheld power tool includes a string trimmer, a hedge trimmer, a blower, a chainsaw, an electric drill, an electric hammer, an electric saw, an angle grinder, and a sander.

The electric all-terrain vehicle provided in the present application achieves better and more convenient communication with the remote device through the wireless networking module, making it easier for the user to understand the state of the vehicle in real time; the OTA upgrade client helps manufacturers continuously improve vehicle performance, add new functions, and improve user experience.

The object of the present application is to provide an electric all-terrain vehicle. The electric all-terrain vehicle includes a vehicle frame; a seat used for a user to sit on and mounted to the vehicle frame; a trunk disposed behind the seat and used for carrying an item; a traveling wheel set supporting the vehicle frame and including front wheels and rear wheels; a suspension assembly dynamically connecting the vehicle frame to the traveling wheel set and used for absorbing shocks for the electric all-terrain vehicle; a driving system for driving the traveling wheel set; and a power supply assembly including an energy storage device and used for supplying electric power to at least the driving system. The energy storage device includes multiple first battery packs, and at least two first battery packs are connected in series for discharge.

In an example, the multiple first battery packs are connected in series and then connected in parallel for discharge.

In an example, the energy storage device further includes second battery packs, and the second battery packs and the first battery packs are different in at least one operating parameter.

In an example, the total voltage of at least two second battery packs connected in series is equivalent to the rated voltage of the first battery pack.

In an example, the power supply assembly further includes a charging interface for charging the energy storage device.

In an example, the charging interface is configured to connect an external power supply or a solar panel.

In an example, the power supply assembly further includes a charging circuit for first charging the energy storage device with a lower voltage.

In an example, the rated capacity of the first battery pack is greater than or equal to 2 kWh.

In an example, the rated voltage of the first battery pack is greater than or equal to 40 V.

In an example, the discharge voltage of the power supply assembly is greater than or equal to 80 V.

In the electric all-terrain vehicle provided in the present application, the battery packs are connected in series for discharge so that the voltage of the driving system can be increased, thereby making the driving system more powerful; further, the battery packs are connected in parallel so that the endurance of the power supply assembly can be improved.

The object of the present application is to provide an electric all-terrain vehicle. The electric all-terrain vehicle includes a vehicle frame; a seat used for a user to sit on and mounted to the vehicle frame; a trunk disposed behind the seat and used for carrying an item; a traveling wheel set supporting the vehicle frame and including front wheels and rear wheels; a suspension assembly dynamically connecting the vehicle frame to the traveling wheel set and used for absorbing shocks for the electric all-terrain vehicle; and a driving system for driving the traveling wheel set. A power supply assembly supplies electric power to at least the driving system. The power supply assembly includes at least four battery packs, and a series-parallel combination relationship of the at least four battery packs is switchable.

In an example, every two battery packs are connected in series to form multiple series paths, and the multiple series paths perform discharging in parallel.

In an example, the discharge voltage of two battery packs connected in series is greater than or equal to 80 V.

In an example, the power supply assembly further includes multiple switches, and the series-parallel combination relationship of the at least four battery packs depends on the states of the multiple switches.

In an example, the power supply assembly further includes an energy management system (EMS) configured to output control signals to control the multiple switches.

In an example, the multiple switches are single pole, double throw switches.

In an example, the multiple switches are divided into different switch groups, and the states of switches in each switch group are the same.

In an example, an EMS controls the states of the multiple switches according to the load of the electric all-terrain vehicle.

In an example, multiple series paths are switched from parallel connection to series connection so that the discharge voltage of the power supply assembly is increased.

In an example, the EMS switches the series-parallel combination relationship of the at least four battery packs according to voltage or state of charge (SoC) information of the at least four battery packs to minimize the sum of voltage differences or SoC differences between battery packs in multiple series paths.

In the electric all-terrain vehicle provided in the present application, the series-parallel combination relationship of multiple battery packs is switchable so that the voltage differences or the SoC differences of the battery packs in multiple series paths can be minimized, thereby achieving equalization of the battery packs and improving the reliability in using electricity.

The object of the present application is to provide an electric all-terrain vehicle. The electric all-terrain vehicle includes a vehicle frame; a seat used for a user to sit on and mounted to the vehicle frame; a trunk disposed behind the seat and used for carrying an item; a traveling wheel set supporting the vehicle frame and including front wheels and rear wheels; a suspension assembly dynamically connecting the vehicle frame to the traveling wheel set and used for absorbing shocks for the electric all-terrain vehicle; and a driving system for driving the traveling wheel set. A power supply assembly supplies electric power to at least the driving system. The power supply assembly includes multiple battery packs, and a charging interface and a discharging interface of the battery pack are different interfaces.

In an example, the battery pack includes a charging positive electrode and a discharging positive electrode that are independent of each other.

In an example, every two battery packs are connected in series for discharge.

In an example, two battery packs connected in series are connected via a pair of metal-oxide-semiconductor field-effect transistors, and the pair of metal-oxide-semiconductor field-effect transistors is turned on during charging and discharging, respectively.

In an example, the discharge voltage of two battery packs connected in series is greater than or equal to 80 V.

In an example, the electric all-terrain vehicle further includes an EMS configured to achieve SoC equalization or voltage equalization between the battery packs.

In an example, two battery packs connected in series are connected to a direct current-direct current (DC-DC) converter.

In an example, each battery pack is connected in parallel with a switch.

In an example, the electric all-terrain vehicle further includes a power consuming device connected in series with the switch.

In an example, a series-parallel relationship of the multiple battery packs is switchable.

In the electric all-terrain vehicle provided in the present application, battery packs whose charging interfaces are different from the discharging interfaces are connected in series for discharge so that while a higher discharge voltage is acquired, the charge current and the discharge current are managed separately, thereby achieving equalization of the battery packs and improving the reliability in using electricity.

The object of the present application is to provide an electric all-terrain vehicle. The electric all-terrain vehicle includes a vehicle frame; a seat used for a user to sit on and mounted to the vehicle frame; a trunk for carrying an item; a traveling wheel set supporting the vehicle frame and including front wheels and rear wheels; a suspension assembly dynamically connecting the vehicle frame to the traveling wheel set and used for absorbing shocks for the electric all-terrain vehicle; and a driving system for driving the traveling wheel set. A battery pack interface is configured in the trunk, and when the battery pack interface is coupled to a battery pack, electrical energy is acquired from the battery pack to supply power to the driving system.

In an example, the electric all-terrain vehicle further includes an energy storage device mounted to the vehicle frame and used for supplying power to the driving system.

In an example, the trunk is disposed behind the seat, and the energy storage device is at least partially disposed below the seat.

In an example, multiple battery pack interfaces are provided.

In an example, at least two battery packs coupled to the battery pack interfaces are connected in series for discharge.

In an example, the rated voltage of the battery pack is greater than or equal to 40 V.

In an example, the energy storage device and the battery pack are connected in parallel for discharge, and the discharge voltage is greater than or equal to 80 V.

In an example, the electric all-terrain vehicle further includes an on-board charger (OBC) configured to charge the energy storage device and the battery pack.

In an example, the battery pack interface is disposed on the inner wall or at the bottom of the trunk.

In an example, the battery pack interface is a semi-open battery pack accommodation cavity.

In the electric all-terrain vehicle provided in the present application, the battery pack interfaces are provided in the trunk, thereby achieving flexible energy expansion and improving the endurance of the electric all-terrain vehicle.

### BRIEF DESCRIPTION OF DRAWINGS

FIG. 1 is a perspective view of an electric all-terrain vehicle according to an example of the present application.
FIG. 2A is a bottom view of an electric all-terrain vehicle according to an example of the present application.
FIG. 2B is a bottom view of an electric all-terrain vehicle according to another example of the present application.
FIG. 2C is a bottom view of an electric all-terrain vehicle according to another example of the present application.
FIG. 3 is a system architecture diagram of the electric all-terrain vehicle shown in FIG. 2A.
FIG. 4A is a perspective view of a first battery pack of an electric all-terrain vehicle according to an example of the present application.
FIG. 4B is an exploded view of the first battery pack shown in FIG. 4A.
FIG. 5 is a schematic view of a power platform of the first battery pack shown in FIG. 4A.
FIG. 6A is a perspective view of an electric all-terrain vehicle according to an example of the present application.
FIG. 6B is a perspective view of an electric all-terrain vehicle according to an example of the present application.
FIG. 6C is a perspective view of an electric all-terrain vehicle according to an example of the present application.
FIG. 7 is a perspective view of a second battery pack of an electric all-terrain vehicle according to an example of the present application.
FIG. 8A is a perspective view of an electric all-terrain vehicle according to an example of the present application.
FIG. 8B is a perspective view of an electric all-terrain vehicle according to an example of the present application.
FIG. 8C is a perspective view of an electric all-terrain vehicle according to an example of the present application.
FIG. 8D is a perspective view of an electric all-terrain vehicle according to an example of the present application.
FIG. 9A is a schematic view of a first power platform of the first battery pack shown in FIG. 4A.
FIG. 9B is a schematic view of a second power platform of the second battery pack shown in FIG. 7.
FIG. 10A is a perspective view of an electric all-terrain vehicle according to an example of the present application.
FIG. 10B is a perspective view of an electric all-terrain vehicle according to an example of the present application.
FIG. 10C is a perspective view of an electric all-terrain vehicle according to an example of the present application.
FIG. 10D is a perspective view of an electric all-terrain vehicle according to an example of the present application.
FIG. 11 is a schematic diagram of a charging assembly of an electric all-terrain vehicle according to an example of the present application.
FIG. 12 is a diagram illustrating the core elements of a torque distribution method according to an example of the present application.
FIG. 13A is a graph illustrating a vehicle speed-required torque characteristic curve of an electric all-terrain vehicle according to an example of the present application.
FIG. 13B is a diagram illustrating electric motor efficiency with torque distribution coefficients calibrated on FIG. 13A.
FIG. 14 is a flowchart of a method for acquiring a torque distribution table according to an example of the present application.
FIG. 15 is a diagram of control modules of an electric motor according to an example of the present application.
FIG. 16 is a space voltage vector switching table used by the control modules of the electric motor shown in FIG. 15.
FIG. 17 is a diagram of control modules of an electric motor according to another example of the present application.
FIG. 18A is a schematic view illustrating the communication between an electric all-terrain vehicle and a remote device according to an example of the present application.
FIG. 18B is a schematic view illustrating the communication between an electric all-terrain vehicle and a remote device according to another example of the present application.
FIG. 18C is a schematic view illustrating the communication between an electric all-terrain vehicle and a remote device according to another example of the present application.
FIG. 19 is a system architecture diagram of over-the-air (OTA) upgrade technology for an electric all-terrain vehicle according to an example of the present application.
FIG. 20 is a perspective view of an electric all-terrain vehicle according to another example of the present application.
FIG. 21 is a system electronic block diagram of an electric all-terrain vehicle according to an example of the present application.
FIG. 22 is an electronic block diagram of a battery pack equalization solution of the present application.
FIG. 23 is an electronic block diagram of another battery pack equalization solution of the present application.
FIG. 24 is an electronic block diagram of another battery pack equalization solution of the present application.
FIG. 25 is an electronic block diagram of a battery pack series-parallel system according to an example of the present application.
FIG. 26A is a schematic diagram of a connection manner of the system shown in FIG. 25.
FIG. 26B is a schematic diagram of another connection manner of the system shown in FIG. 25.
FIG. 26C is a schematic diagram of another connection manner of the system shown in FIG. 25.

### DETAILED DESCRIPTION

Before any examples of this application are explained in detail, it is to be understood that this application is not limited to its application to the structural details and the arrangement of components set forth in the following description or illustrated in the above drawings.

**In** this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

**In** this application, the term "and/or" is a kind of association relationship describing the relationship between associated objects, which means that there can be three kinds of relationships. For example, A and/or B can indicate that A exists alone, A and B exist simultaneously, and B exists alone. **In** addition, the character "/" in this application generally indicates that the contextual associated objects belong to an "and/or" relationship.

**In** this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

It should be noted that the terms "first", "second", etc. in the detailed description and claims of the present application and the above-mentioned drawings are used to distinguish similar objects, and are not necessarily used to describe a specific order or sequence. It should be understood that the data used in this way can be interchangeable where appropriate, so that the embodiments of the present application described herein can be implemented in an order other than those illustrated or described herein. In addition, the term "comprising" and any variation thereof are intended to cover non-exclusive inclusions, for example, a process, method, system, product or device comprising a series of steps or units is not necessarily limited to those steps or units clearly listed, but may include other steps or units that are not clearly listed or inherent to these processes, methods, products or devices.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

An electric all-terrain vehicle according to an example of the present application is described below in conjunction with drawings.

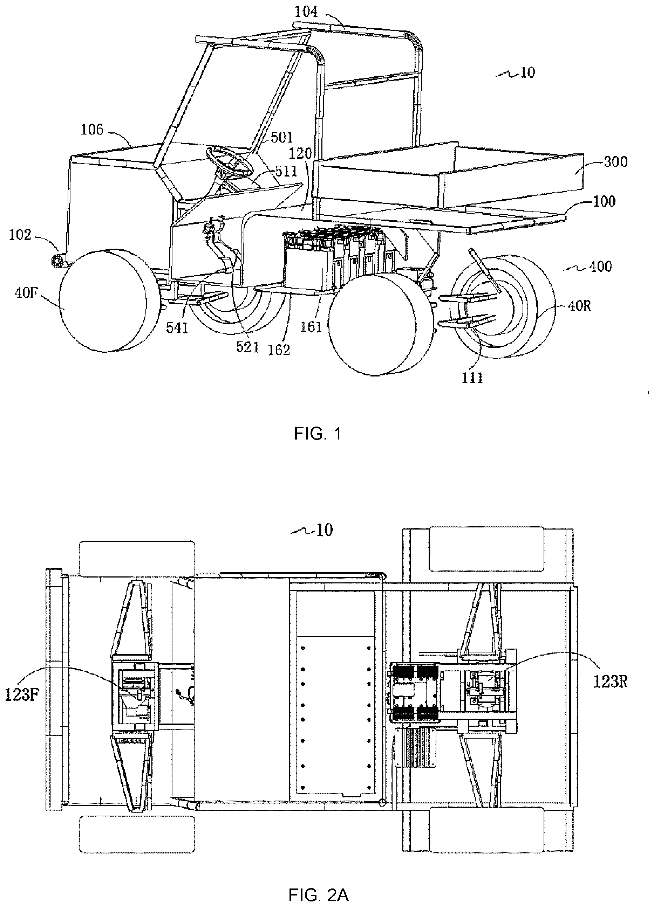

As shown in FIG. 1, this example provides an electric all-terrain vehicle 10. The electric all-terrain vehicle 10 uses batteries as power, has lower costs, is more environmentally friendly, and does not require frequent replacement of parts, thereby reducing maintenance costs.

As shown in FIG. 1, in this example, the electric all-terrain vehicle 10 may include a vehicle frame 100, a seat 120, and a trunk 300. The vehicle frame 100 may be a symmetrical structure and includes at least two beams and at least two rails. The seat 120 is mounted to the vehicle frame 100, the trunk 300 is disposed on the vehicle frame 100, and the trunk 300 may be located behind the seat 120. The electric all-terrain vehicle 10 further includes front wheels 40F and rear wheels 40R. The front wheels 40F and the rear wheels 40R may be defined as traveling wheels of the electric all-terrain vehicle 10, and the front wheels 40F and the rear wheels 40R form a traveling wheel set 400. The traveling wheel set 400 may further include a first differential enabling two front wheels to rotate at different speeds and a second differential enabling two rear wheels to rotate at different speeds. In an example, the rear wheels 40R can provide a driving force for the electric all-terrain vehicle 10. In an example, the front wheels 40F and the rear wheels 40R provide driving forces for the electric all-terrain vehicle 10. The trunk 300 is disposed above the rear wheels 40R. The trunk 300 may be used for carrying an item, for example, a heavy object weighing 260 to 460 kg. The electric all-terrain vehicle 10 further includes a suspension assembly 111 dynamically connecting the vehicle frame 100 to the traveling wheel set 400 and providing shock absorbing and damping effects for the whole machine to reduce bumps for the user.

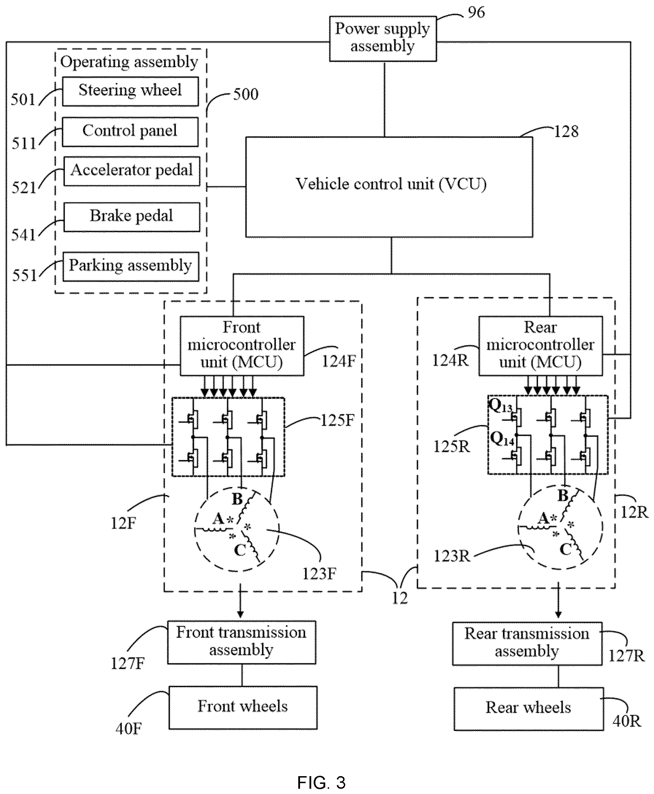

As shown in FIGS. 1 and 3, in this example, the electric all-terrain vehicle 10 includes a steering wheel 501, and the steering wheel 501 may be located in front of the seat 120. The steering wheel 501 is connected to a steering gear. The steering gear is driven by turning the steering wheel 501, and the steering gear pulls the steering knuckle of the front wheels 40F to rotate, thereby changing the traveling direction of the electric all-terrain vehicle 10. In addition to the steering wheel, an operating assembly 500 of the electric all-terrain vehicle 10 further includes a control panel 511, an accelerator pedal 521, a brake pedal 541, and a parking assembly 551. In an example, the parking assembly 551 includes a parking pedal. In another example, the parking assembly 551 includes a parking handle or a parking button. The electric all-terrain vehicle 10 may further include a display screen 531 for displaying various types of information about the electric all-terrain vehicle 10, for example, the cruising range or the driving mode. In an example, the display screen 531 is an interactive terminal that can be used not only for displaying information but also for acquiring the user input and is used as a part of the control panel 511. In an example, the dimension of the display screen 531 is greater than or equal to 12 inches.

Further, a front bumper 102 is disposed in the front of the vehicle frame 100, and the front bumper 102 can protect the electric all-terrain vehicle 10. Further, a towing structure is disposed in the front of the vehicle frame 100. When the electric all-terrain vehicle 10 is stuck in a muddy area, a fixed object may be towed to make the electric all-terrain vehicle 10 escape from the muddy area. In an example, the towing structure further includes a winch motor. Optionally, a towing connection is further disposed at the rear of the vehicle frame 100, and the towing connection can tow a heavy object, for example, a heavy object weighing 200 to 400 kg. Optionally, the towing connection can tow a wheeled power tool.

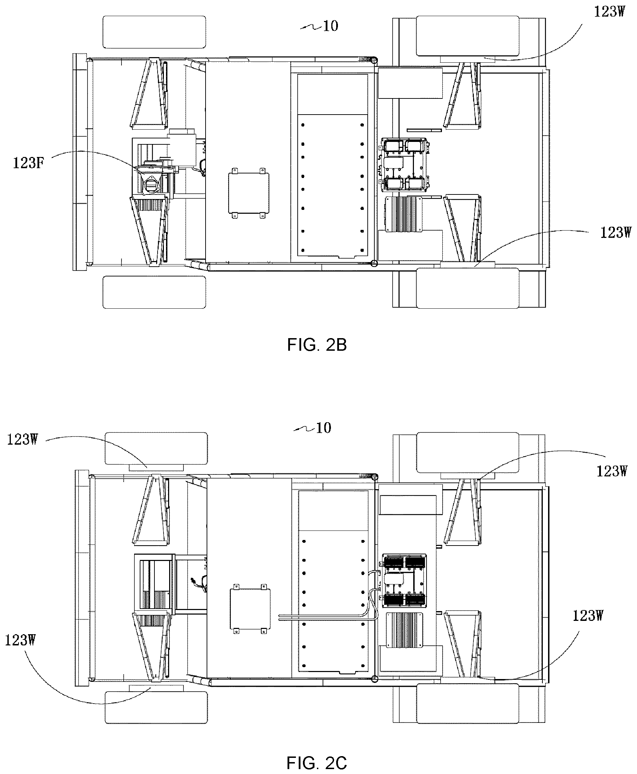

As shown in FIGS. 2A to 2C, the electric all-terrain vehicle 10 further includes a driving system 12, and the driving system 12 includes at least two drive motors 123 for driving the traveling wheel set (two electric motors 123F and 123R distributed front and rear shown in FIG. 2A or distributed left and right). Alternatively, the driving system 12 may include three electric motors (as shown in FIG. 2B, the three electric motors are one electric motor 123F in the front and two electric motors in the rear, where the two electric motors in the rear may be wheel hub motors 123W), or the driving system 12 may include four electric motors (wheel hub motors 123W as shown in FIG. 2C).

As shown in FIG. 3, the electric all-terrain vehicle 10 further includes a power supply assembly 96. The power supply assembly 96 includes an energy storage device and supplies electric power to various components of the electric all-terrain vehicle 10. In an example, the power supply assembly 96 is formed by detachable battery packs. In an example, the power supply assembly 96 is formed by nondetachable built-in cell modules. In an example, the power supply assembly 96 is formed by detachable battery packs and nondetachable built-in cell modules. In an example, the power supply assembly 96 is formed by detachable first battery packs 161 and detachable second battery packs 152, where the first battery pack 161 and the second battery pack 152 are different in at least one operating parameter. It is to be noted that the nondetachable in the present application means that the user cannot remove the built-in cell module in the installed state without the aid of tools and does not mean that maintenance personnel cannot remove the built-in cell module in the installed state even with the aid of professional tools. Otherwise, it is detrimental to the maintenance of the electric all-terrain vehicle 10. In contrast, the detachable in the present application means that the user can remove the battery pack in the installed state without the aid of tools so that the user can conveniently take out the battery pack for charging, or replace a low-power battery pack with another high-power battery pack, or replace a battery pack in a poor condition with another battery pack in a good condition. Further, in the case where the battery pack matches a power tool 20, the battery pack in the electric all-terrain vehicle 10 is taken out to supply power to the power tool 20. Alternatively, in the case where the battery pack matches an energy station 310, the battery pack in the electric all-terrain vehicle 10 is taken out to serve as the power supply of the energy station 310, thereby increasing the utilization rate of the battery pack, reducing usage costs, and improving the convenience. In an example, the trunk 300 may accommodate the power tool 20 or the energy station 310, thereby further providing convenience to the user.

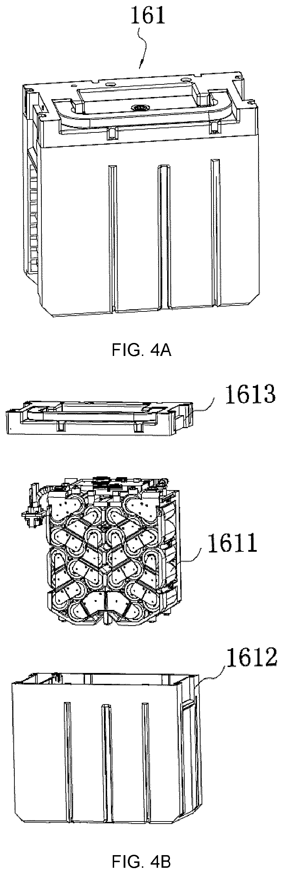

As shown in FIGS. 4A and 4B, the energy storage device of the electric all-terrain vehicle 10 may include the first battery pack 161, and the first battery pack 161 includes multiple cell units 1611 connected in series, connected in parallel, or connected in series and in parallel. Multiple cell units 1611 are integrated in a battery housing 1612 to form a whole. The cell units 1611 may specifically be lithium cell units. In an example, the cell units 1611 are lithium iron phosphate batteries. In an example, the cell units 1611 are ternary lithium batteries. In an example, the cell units 1611 are lead-acid batteries. It is to be understood that the cell unit 1611 is not necessarily a cylinder shown in FIG. 4B and may be in other shapes such as a rectangular cuboid, a blade, and a pouch. In an example, the multiple cell units 1611 may include two or more different types of cells, for example, 18650 and 21710 cells, lithium iron phosphate cells and ternary lithium cells, or liquid cells, solid-state cells, and semi-solid-state cells. Optionally, the first battery pack 161 further includes a battery pack cover 1613.

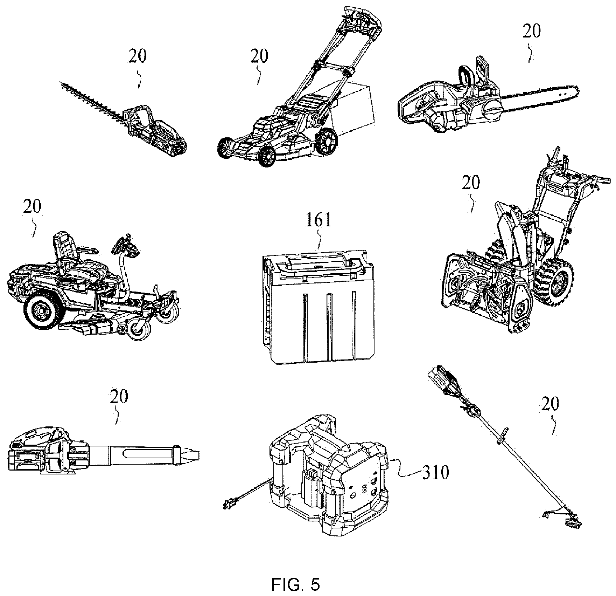

As shown in FIG. 5, the power tool 20 may be a garden tool such as a string trimmer, a hedge trimmer, a blower, or a chainsaw; the power tool 20 may also be a torque output tool such as an electric drill or an electric hammer; the power tool 20 may also be a sawing tool such as an electric circular saw, a jigsaw, or a reciprocating saw; and the power tool 20 may also be a grinding tool such as an angle grinder or a sander. In other examples, the first battery pack 161 may be configured to be capable of supplying power to a push power tool such as a push mower and a push snow thrower. **In** other examples, the first battery pack 161 may be configured to be capable of supplying power to a riding garden tool such as a riding mower. In this manner, the first battery packs 161 adapted to the electric all-terrain vehicle 10 of the present application can be unplugged by the user and applied to the preceding power tools 20. In other words, the user can use the battery packs in these power tools 20 as the first battery packs 161 that can supply power to the electric all-terrain vehicle 10.

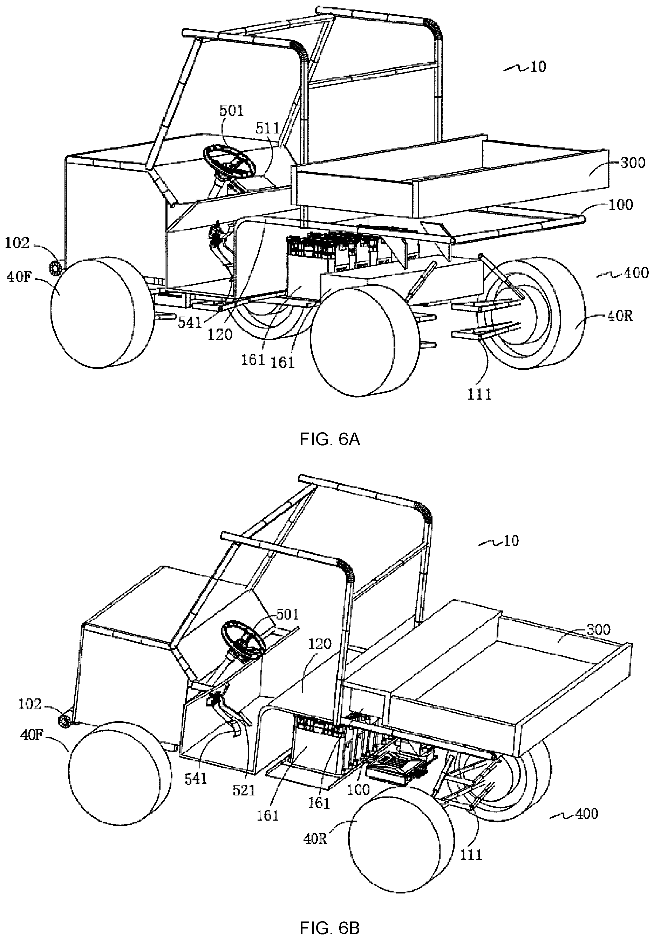

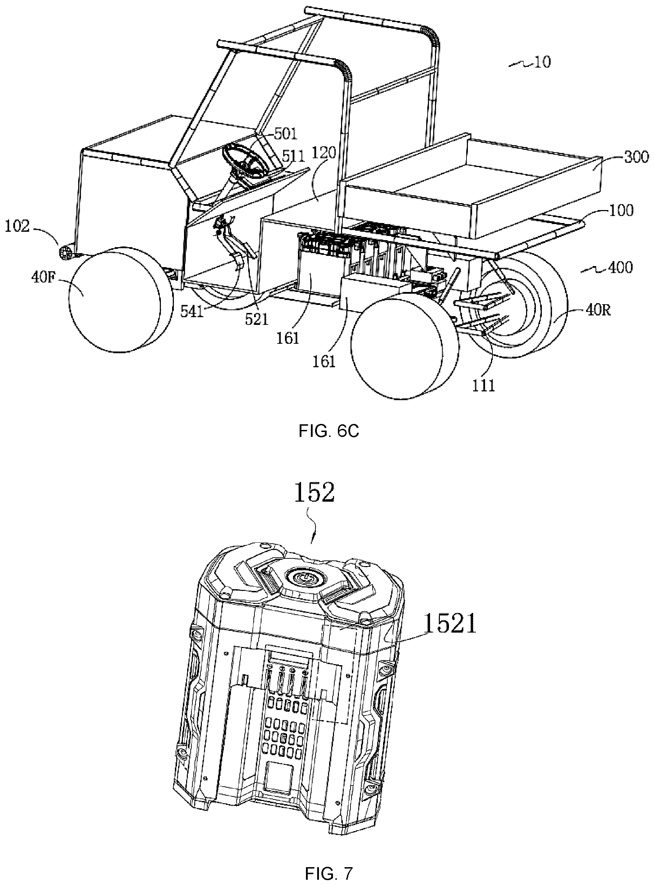

As shown in FIG. 1, in an example, the first battery packs 161 are mounted below the seat 120. As shown in FIGS. 6A to 6C, in another example, at least one first battery pack 161 is disposed below the seat 120, and the remaining first battery packs 161 are disposed below the trunk 300; in another example, at least one first battery pack 161 is disposed below the seat 120, and the remaining first battery packs 161 are disposed between the trunk 300 and the seat 120; in another example, at least one first battery pack 161 is disposed below the seat 120, and the remaining first battery packs 161 are distributed on two sides of the vehicle frame 100.

Referring to FIG. 1, the first battery pack 161 may be mounted to a first battery holder 162. A first groove may be formed in the first battery holder 162, and the first battery pack 161 can be detachably inserted into the first groove along the extension direction of the first groove and pulled out of the first groove along the extension direction of the first groove. In an example, a bottom 301 of the trunk 300 has an open state and a closed state. When the bottom 301 is in the open state, the first groove is opened. In this case, the user may insert the first battery pack 161 into the first groove. When the bottom 301 is in the closed state, the first groove is closed so that the first battery pack 161 located in a battery holder housing can be protected to a certain extent, for example, be protected from dust and rain. In an example, a seat surface 201 of the seat 120 has an open state and a closed state. When the seat surface 201 is in the open state, the first groove is opened. In this case, the user may insert the first battery pack 161 into the first groove. When the seat surface 201 is in the closed state, the first groove is closed so that the first battery pack 161 located in the battery holder housing can be protected to a certain extent, for example, be protected from dust and rain. It is to be understood that the first groove may be opened upward (referring to the preceding two examples) or opened to the left and right. For example, when first battery holders 162 are disposed on two sides of the vehicle frame 100, respectively, the first grooves are opened to two sides of the electric all-terrain vehicle 10, which is convenient for the user to remove the first battery packs 161 from two sides. It is to be understood that multiple first battery packs 161 (for example, two or four first battery packs 161) may be mounted in a larger battery holder 162. For example, the power supply assembly 96 includes only one battery holder, and the multiple first battery packs 161 are all mounted in this one battery holder. That is to say, the number of the first battery holders 162 and the number of the first battery packs 161 are not specifically limited, and the correspondence between the first battery holders 162 and the first battery packs 161 is not limited to a one-to-one correspondence.

As shown in FIG. 7, in another example, the energy storage device of the electric all-terrain vehicle 10 may further include a second battery pack 152, and the second battery pack 152 may be disposed at a position different from a position where the first battery pack 161 is disposed. The second battery pack 152 includes multiple cell units 1521 connected in series, connected in parallel, or connected in series and in parallel. The multiple cell units 1521 are integrated in a battery housing to form a whole. In an example, the cell units 1521 are lead-acid batteries. In an example, the cell units 1521 are ternary lithium batteries. In an example, the cell units 1521 are silicon-carbon batteries. In an example, the cell units 1521 are solid-state or semi-solid-state batteries. In an example, the cell units 1521 are sodium-ion batteries. Similar to those of the first battery pack 161, the multiple cell units 1521 of the second battery pack 152 may include two or more different types of cells. In an example, the cell unit 1611 of the first battery pack 161 and the cell unit 1521 of the second battery pack 152 are different, for example, have different chemical properties or different specifications. Of course, the cell unit 1611 of the first battery pack 161 and the cell unit 1521 of the second battery pack 152 may have the same chemical properties and the same specifications or even are completely the same. Even if the first battery pack 161 and the second battery pack 152 have the same cell unit, due to different connections between the cells, different numbers of cells, and/or different arrangements of the cells, the first battery pack 161 and the second battery pack 152 are different in at least one operating parameter such as the rated voltage, rated capacity, charge and discharge rate, energy density, operating temperature, and protection threshold. For example, the rated capacity of the first battery pack 161 is greater than or equal to 2 kWh, and the rated capacity of the second battery pack 152 is less than or equal to 1 kWh. That is to say, the ratio of the rated capacity of the first battery pack 161 to the rated capacity of the second battery pack 152 is greater than or equal to 2. In an example, the rated voltage of the first battery pack 161 is 55 V, and the rated voltage of the second battery pack 152 is 12 V. In an example, the rated voltage of the first battery pack 161 is greater than or equal to 40 V, and the rated voltage of the second battery pack 152 is less than or equal to 24 V. In an example, the rated voltage of the second battery pack 152 is less than or equal to 20 V. In an example, the ratio of the rated voltage of the first battery pack 161 to the rated voltage of the second battery pack 152 is greater than or equal to 2. In another example, the rated voltage of the first battery pack 161 is equivalent to the rated voltage of the second battery pack 152.

The second battery pack 152 may be mounted to the electric all-terrain vehicle 10 in a manner similar to the manner in which the first battery pack 161 is mounted to the electric all-terrain vehicle 10. The second battery pack 152 may be mounted to the electric all-terrain vehicle 10 in a manner different from the manner in which the first battery pack 161 is mounted to the electric all-terrain vehicle 10. For example, the first battery pack 161 is mounted via a slide rail, and the second battery pack 152 is mounted via a buckle. By using two or more types of battery packs, the advantages of various battery packs can be combined to complement each other and improve the performance of the electric all-terrain vehicle 10 in terms of endurance, acceleration, low-temperature driving, safety, and the like. For example, when the electric all-terrain vehicle 10 needs to drive at low temperatures, the battery pack with a wide operating temperature range may be used; when the electric all-terrain vehicle 10 needs to accelerate rapidly, the battery pack with a high discharge rate may be used; and by default, the battery pack with a high energy density may be used to increase endurance.

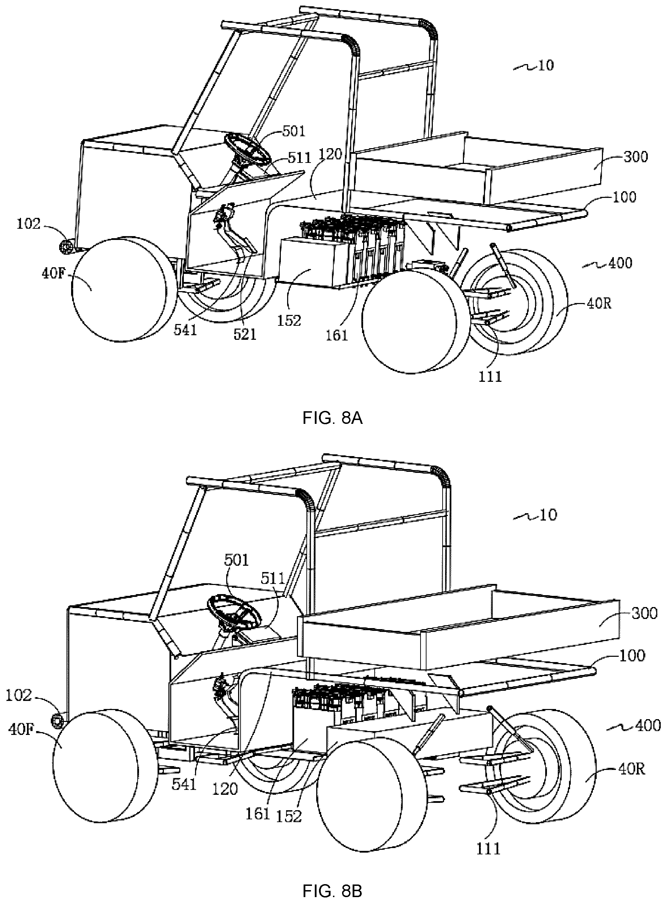

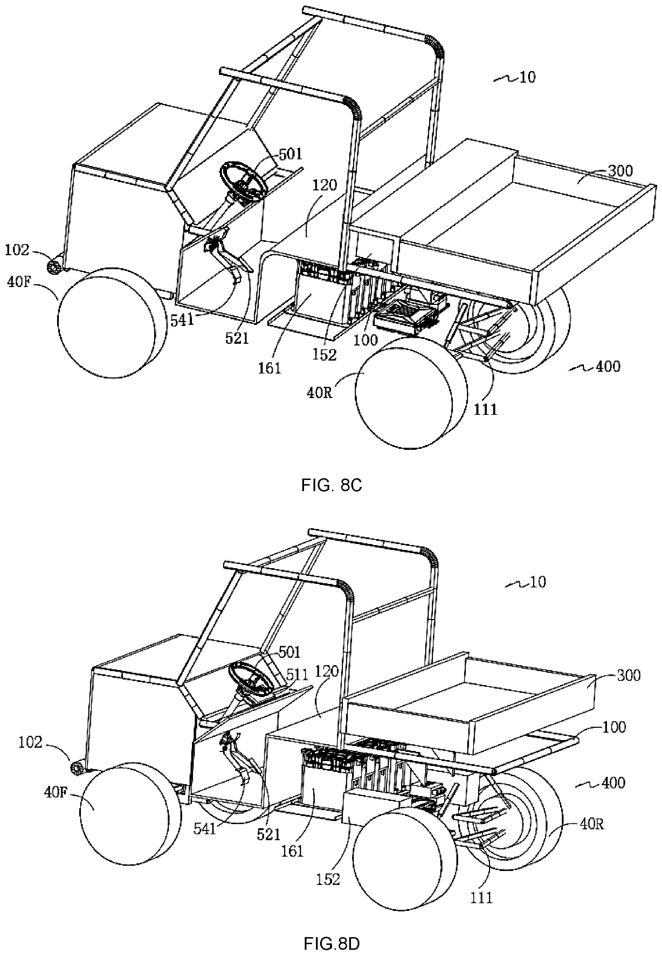

**In** addition, when two types of battery packs have different dimensions, the two types of battery packs may be mounted more compactly in the electric all-terrain vehicle 10, thereby saving space. As shown in FIGS. 8A to 8D, in an example, the first battery packs 161 and the second battery pack 152 are both disposed below the seat 120, and the second battery pack 152 is disposed on the side surface of the first battery packs 161 and placed side by side with the first battery packs 161; in another example, the first battery packs 161 are disposed below the seat 120, and the second battery pack 152 is disposed below the trunk 300; in another example, the first battery packs 161 are disposed below the seat 120, and the second battery pack 152 is disposed between the trunk 300 and the seat 120; in another example, the first battery packs 161 are disposed below the seat 120, and the second battery packs 152 are distributed on two sides of the vehicle frame 100. When the two types of battery packs have different voltages, the two types of battery packs can supply electrical energy to different electrical devices, respectively. For example, the first battery packs 161 supply power to a driver circuit, and the second battery packs 152 supply power to controllers and a wireless networking module, thereby eliminating the need for a voltage conversion device and isolating high voltage from low voltage, which is safer.

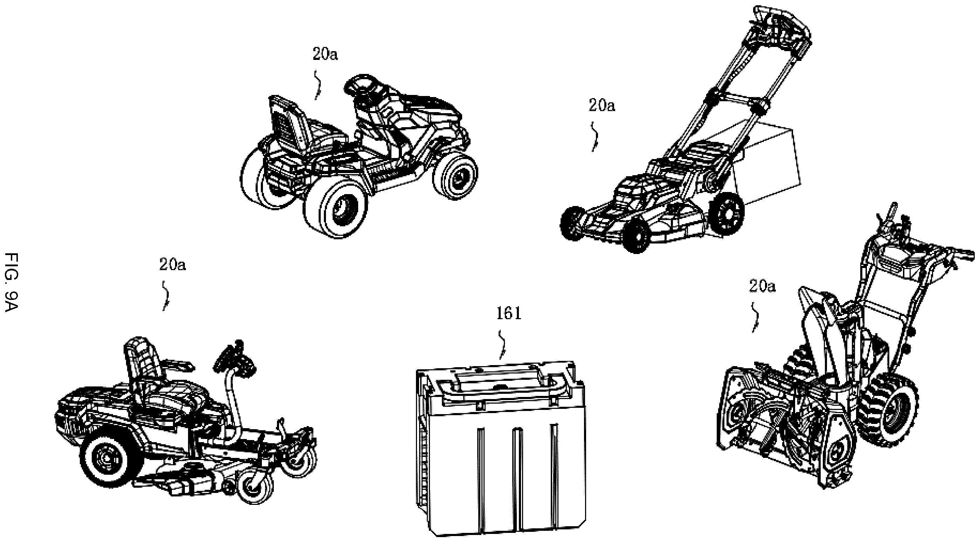

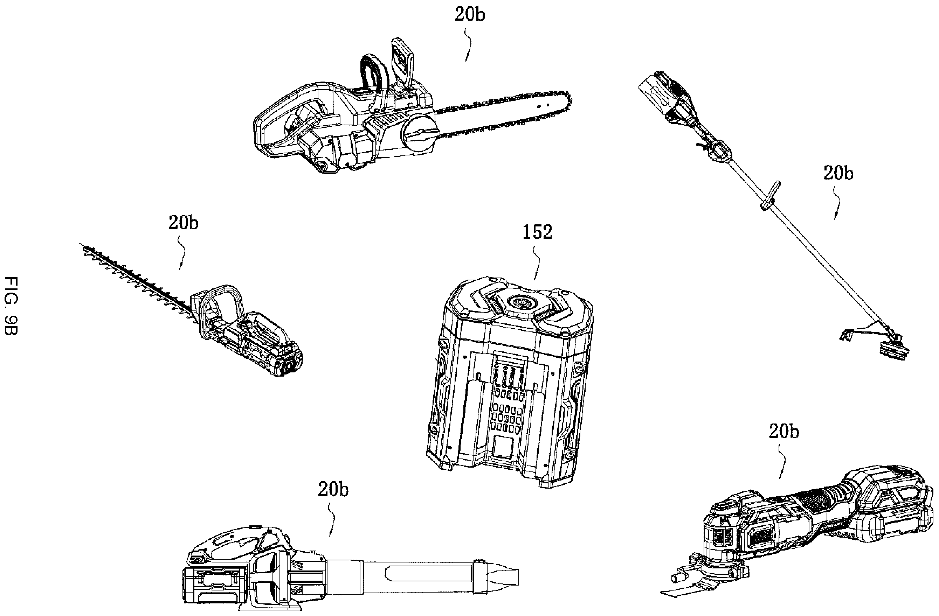

**In** addition, as shown in FIGS. 9A and 9B, when two or more types of battery packs belong to different battery pack platforms, more types of electronic devices can be flexibly matched. As shown in FIG. 9A, the first battery packs 161 belong to a first power platform and are configured to supply power to a wheeled power tool 20a such as a riding mower or a push garden tool. As shown in FIG. 9B, the second battery packs 152 belong to a second power platform and are configured to supply power to a handheld power tool 20b such as a string trimmer, a hedge trimmer, a blower, a chainsaw, an electric drill, an electric hammer, an electric saw, an angle grinder, or a sander. In this manner, no matter which type of power tools are loaded by the user on the electric all-terrain vehicle 10, the battery packs of the electric all-terrain vehicle 10 can be flexibly interchanged with the battery packs of the loaded power tools.

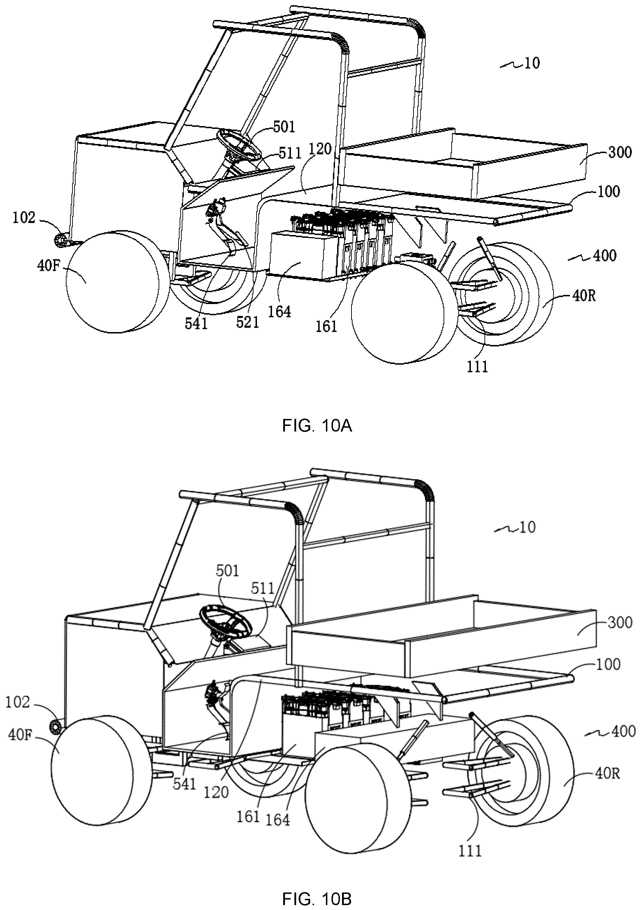

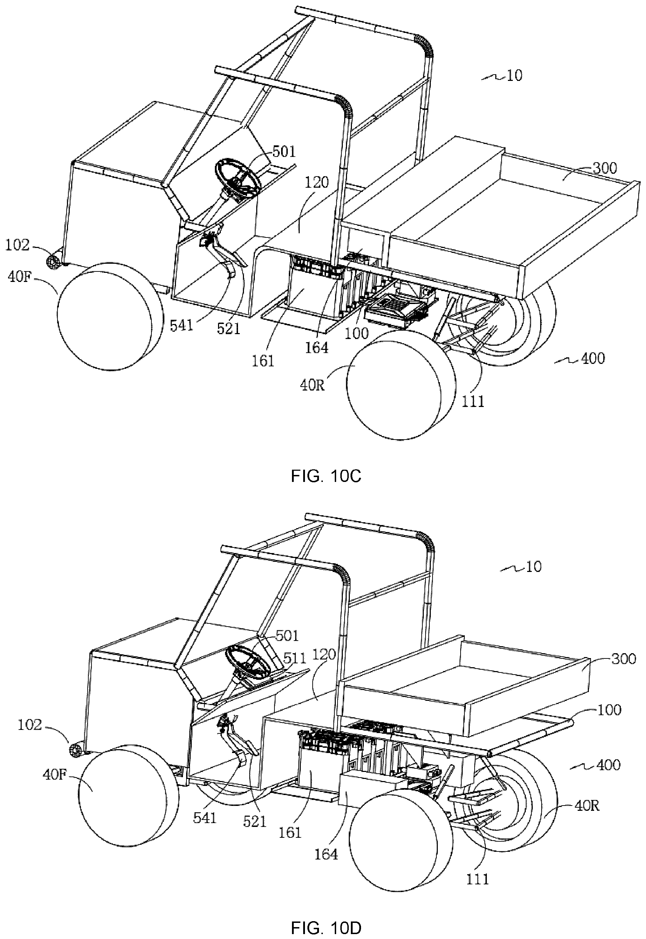

In another example, the energy storage device of the electric all-terrain vehicle 10 may be configured to be a combination of nondetachable built-in cell modules 164 and detachable battery packs, where the detachable battery packs may be the first battery packs 161, the second battery packs 152, or other battery packs. The case where the energy storage device is a combination of the first battery packs 161 and the built-in cell modules 164 is used as an example as shown in FIGS. 10A to 10D. In an example, the first battery packs 161 and the built-in cell module 164 are disposed below the seat 120, and the built-in cell module 164 is disposed on a side surface of the first battery packs 161 and placed side by side with the first battery packs 161; in another example, the first battery packs 161 are disposed below the seat 120, and the built-in cell module 164 is disposed below the trunk 300; in another example, the built-in cell module 164 is disposed below the seat 120, and the first battery packs 161 are disposed between the trunk 300 and the seat 120; in another example, the built-in cell module 164 is disposed below the seat 120, and the first battery packs 161 are distributed on two sides of the vehicle frame 100. Similarly, the built-in cell module 164 is formed by one or more types of the preceding cell units. Compared with the detachable battery pack, the built-in cell module 164 has a lower cost and a more compact structure. While saving space and costs, the built-in cell module 164 provides the electric all-terrain vehicle 10 with more sufficient energy reserves. In addition, a certain number of detachable external battery packs are provided so that flexibility is ensured. For example, the user may take only the first battery packs 161 away for charging without the need to drive the entire electric all-terrain vehicle 10 to a charging station. When the user is inconvenient or has no time to charge the built-in cell modules 164 of the electric all-terrain vehicle 10, the first battery packs 161 may be directly inserted so that a short-time driving requirement can be satisfied.

In another example, the energy storage device of the electric all-terrain vehicle 10 is formed by the nondetachable built-in cell module 164. The energy storage device of the electric all-terrain vehicle 10 may be a single built-in cell module or multiple built-in cell modules. Similarly, in an example, the built-in cell modules 164 are mounted below the seat 120; in another example, at least one built-in cell module 164 is disposed below the seat 120, and the remaining built-in cell modules 164 are disposed below the trunk 300; in another example, at least one built-in cell module 164 is disposed below the seat 120, and the remaining built-in cell modules 164 are disposed between the trunk 300 and the seat 120; in another example, at least one built-in cell module 164 is disposed below the seat 120, and the remaining built-in cell modules 164 are distributed on two sides of the vehicle frame 100.

Optionally, the energy storage device is surrounded by anti-collision and anti-puncture structural members. In an example, the energy storage device is surrounded by metal mesh or metal plates. A shock absorbing elastic element, such as a spring or a rubber pad, may be added below the energy storage device.

The power supply assembly 96 further includes a battery management system (BMS). For example, the BMS is implemented through a BMS controller 175 on a battery management circuit board 964. The BMS controller 175 is mainly used for managing the charging and discharging of the preceding energy storage device and has functions such as overvoltage protection, undervoltage protection, overcurrent protection, temperature protection, and cell equalization. As shown in FIG. 2A, in an example, the battery management circuit board 964 is disposed below the energy storage device. In an example, the battery management circuit board 964 is disposed behind the energy storage device, is closer to the energy storage device, and has a shorter wiring path. In an example, the battery management circuit board 964 is disposed in front of the energy storage device. Specifically, the battery management circuit board 964 is located on a front inner wall of the seat 120. Moreover, a vent is provided on a front side of the seat. In this manner, when the electric all-terrain vehicle 10 travels forward, the battery management circuit board 964 is blown against a wind, thereby achieving a good heat dissipation effect. In an example, the battery management circuit board 964 is disposed above the energy storage device. For example, a part of the energy storage device is disposed below the trunk 300, and the battery management circuit board 964 is disposed above this part of the energy storage device and mounted to the vehicle frame 100, thereby improving stability and avoiding impacts and wading. Moreover, the trunk 300 is provided with a vent to optimize the heat dissipation effect of the battery management circuit board 964.

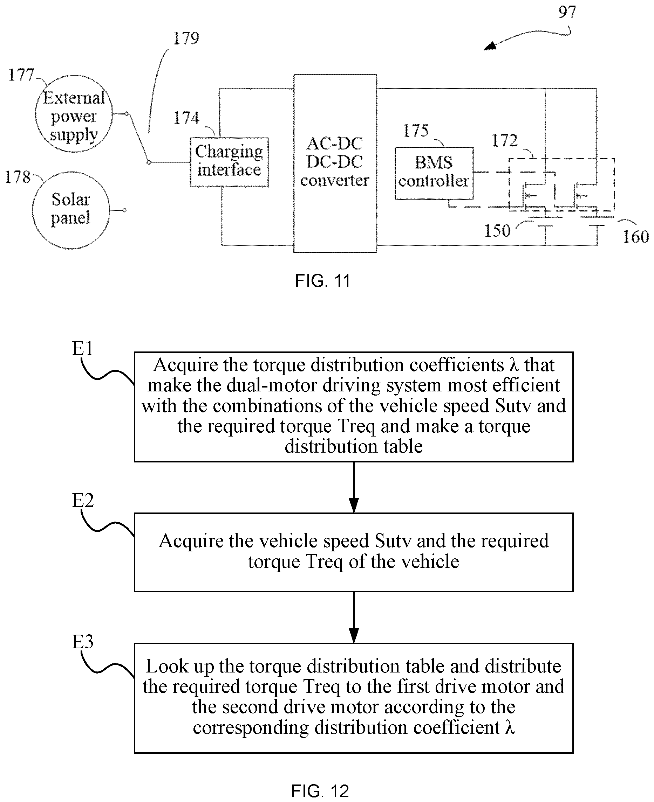

The power supply assembly 96 further includes a charging assembly 97. As shown in FIG. 11, the charging assembly 97 includes a charging interface 174. The charging interface 174 is configured to be electrically connected to an external power supply 177 so that the external power supply 177 can supply power to the energy storage device through the charging interface 174. In an example, the charging interface 174 is a mains power plug. In another example, the charging interface 174 may be electrically coupled to a charging gun. Specifically, the charging gun may be a DC charging gun, for example, a type 1 CCS1 interface, a type 2 CCS2 interface, or a GB/T national standard interface is used; the charging gun may be an AC charging gun, for example, a type 1 SAE J1772 interface, a type 2 IEC 62196 interface, or a GB/T20234 national standard interface is used. It is to be understood that the charging assembly 97 needs to include at least an AC-DC converter so that the AC charging gun can be used for charging.

In addition to being connected to the external power supply 177, the electric all-terrain vehicle 10 can convert other energy into electrical energy and store the electrical energy. In an example, the electric all-terrain vehicle 10 may include a solar panel 178, and the solar panel 178 may be disposed on a roof 104, a front cover 106, or the trunk 300 of the electric all-terrain vehicle 10; or the electric all-terrain vehicle 10 may be connected to a detachable solar panel 178, and the user may mount the solar panel 178 at a suitable position when the solar panel 178 is needed. In an example, the charging interface 174 can be electrically connected to the solar panel 178. Referring to FIG. 11, the charging assembly 97 further includes a power switching circuit 179, and the power switching circuit 179 includes a switch, thereby achieving switching between the external power supply 177 and the solar panel 178.

The charging assembly 97 further includes a charging circuit 172, and the charging circuit 172 includes multiple switches controlled by the BMS controller 175 to be turned on and off. When the electric all-terrain vehicle 10 includes two or more energy storage devices, the BMS controller 175 may adopt the charging logic below (the case where the electric all-terrain vehicle 10 includes two energy storage devices is used as an example). The charging circuit 172 is electrically connected to a first energy storage device 150 and a second energy storage device 160. Further, the charging circuit 172 is electrically connected to the BMS controller 175 and the charging interface 174. The controller 175 controls the charging circuit 172 to be electrically connected to the external power supply 177/solar panel 178 via the charging interface 174 so that the external power supply 177/solar panel 1787 can supply power to the first energy storage device 150 and the second energy storage device 160 via the charging interface 174. The charging circuit 172 has a first charging mode and a second charging mode. When the charging circuit 172 is in the first charging mode, the charging circuit 172 charges one of the first energy storage device 150 and the second energy storage device 160. When the charging circuit 172 is in the second charging mode, the charging circuit 172 charges the first energy storage device 150 and the second energy storage device 160 simultaneously. The controller 175 is configured to, when the voltage of the first energy storage device 150 and the voltage of the second energy storage device 160 are different, control the charging circuit 172 to be in the first charging mode and when the voltage of the first energy storage device 150 and the voltage of the second energy storage device 160 are basically the same, control the charging circuit to be in the second charging mode. In this manner, when the voltage of the first energy storage device 150 and the voltage of the second energy storage device 160 are different, the charging circuit 172 is in the first charging mode and first charges one of the first energy storage device 150 or the second energy storage device 160 which has a lower voltage; and when the voltage of the first energy storage device 150 and the voltage of the second energy storage device 160 are basically the same, the charging circuit 172 switches to the second charging mode and can charge the first energy storage device 150 and the second energy storage device 160 simultaneously. In this manner, not only can the first energy storage device 150 and the second energy storage device 160 satisfy the most basic SoC requirements more quickly, but also the charging efficiency can be improved.

It is to be understood that the first energy storage device 150 and the second energy storage device 160 may be the first battery pack 161 and the second battery pack 152, may be the first battery pack 161 and the built-in cell module 164, or may be the second battery pack 152 and the built-in cell module 164, which is not limited in the present application. In fact, the preceding charging logic is not only applicable to two or more kinds of energy storage devices but also to a single kind of energy storage device. During actual application, energy storage devices having different aging situations, resulting in inconsistent voltages, may also be regarded as the first energy storage device and the second energy storage device.

In addition, the electric all-terrain vehicle 10 can convert the kinetic energy of electric motors 123 during deceleration or braking into electrical energy for energy recovery. In addition, for multiple battery packs, especially two or more types of battery packs, the power supply assembly 96 may include an internal charging circuit to enable the first battery pack 161 to charge the second battery pack 152 and/or enable the second battery pack 152 to charge the first battery pack 161. Of course, in the case where the battery pack is detachable, the power supply assembly 96 may not include the charging interface 174 and the solar panel 178, and the following method is adopted: the battery pack is taken out and then coupled to the charger, and the charger is used to charge the battery pack. For the user who has the charger for the battery pack, this electric all-terrain vehicle 10 with simple configuration saves costs and reuses the charger of the battery pack platform.

The power supply assembly 96 further includes a discharging assembly. The discharging assembly may include a DC output interface such as a Universal Serial Bus (USB) interface so that it is convenient for the user to charge a DC device such as a mobile phone. The discharging assembly may include an AC output interface such as a two-prong outlet or a three-prong outlet so that it is convenient for the user to use an AC device such as an induction cooker on the electric all-terrain vehicle 10. To prevent the electric all-terrain vehicle 10 from continuing supplying power to the DC output interface and the AC output interface when the electric all-terrain vehicle 10 is insufficient in power and causing problems such as a sudden reduction in battery life and excessive discharge, a threshold, such as 70%, may be set. That is, if the remaining power of the battery pack of the electric all-terrain vehicle 10 is greater than or equal to 70%, the DC output interface and the AC output interface are powered; if the remaining power of the battery pack of the electric all-terrain vehicle 10 is less than 70%, the DC output interface and the AC output interface are not powered. It is to be noted that here, 70% is only an example and does not limit the scope of the present application.

The discharging assembly is electrically connected to the control panels to supply power to the control panels of the electric all-terrain vehicle 10. The discharging assembly is electrically connected to an illumination assembly to supply power to the illumination assembly of the electric all-terrain vehicle 10. If the electric all-terrain vehicle 10 is provided with the wireless networking module, the discharging assembly supplies power to the wireless networking module of the electric all-terrain vehicle 10. Further, the discharging assembly is electrically connected to driver circuits of the electric motors to supply electric power to the driving system 12 of the electric all-terrain vehicle 10. It is to be understood that the discharging assembly may include one or more of an inverter circuit, a rectifier circuit, a buck circuit, a boost circuit, a DC-DC conversion circuit, and a DC-AC conversion circuit to satisfy the voltage requirements of different assemblies. The circuits of the discharging assembly may be controlled by the BMS controller 175. Multiple energy storage devices may be connected in parallel for discharge, connected in series for discharge, or connected in series and in parallel for discharge. In an example, two first battery packs 161 with a rated voltage of 55 V are connected in parallel and can be discharged at a rated voltage of 55 V. In an example, two first battery packs 161 with a rated voltage of 55 V are connected in series and can be discharged at a rated voltage of 110 V. In an example, eight first battery packs 161, in which every two first battery packs 161 are connected in series to form four series paths and the four series paths are connected in parallel, form a power supply system with a bus voltage of 110 V. In an example, the total voltage of two or more second battery packs 152 connected in series can reach the rated voltage of the first battery pack 161 so that the two or more second battery packs 152 and the first battery pack 161 can be discharged in a combination. In an example, the rated voltage of the second battery pack 152 is equivalent to the rated voltage of the first battery pack 161 so that the second battery pack 152 can be directly connected in parallel or in series with the first battery pack 161 for discharge. In an example, the discharge voltage of the power supply assembly 96 is greater than or equal to 80 V. In an example, the discharge voltage of the power supply assembly 96 is greater than or equal to 100 V. In an example, the discharge voltage of the power supply assembly 96 is greater than or equal to 110 V.

Referring to FIG. 3, in an example, the driving system 12 of the electric all-terrain vehicle 10 includes two drive motors 123, that is, the front drive motor 123F and the rear drive motor 123R. That is to say, the driving system 12 of the electric all-terrain vehicle 10 is formed by a front driving system 12F and a rear driving system 12R. The front driving system 12F includes the front drive motor 123F, a front controller 124F, and a front driver circuit 125F. The front driving system 12F drives the front wheels 40F to move. Optionally, the output shaft of the front drive motor 123F is connected to a front transmission assembly 127F to drive the front wheels 40F to rotate. The rear driving system 12R includes the rear drive motor 123R, a rear controller, and a rear driver circuit 125R. The rear driving system 12R drives the rear wheels 40R to move. Optionally, the output shaft of the rear drive motor 123R is connected to a rear transmission assembly 127R to drive the rear wheels 40R to rotate. In an example, the front driving system 12F and the rear driving system 12R are each matched with a permanent magnet synchronous motor, a motor controller, and two stages of decelerators with the same gear ratio. In an example, the front drive motor 123F is an asynchronous motor, and the rear drive motor 123R is a permanent magnet synchronous motor. In an example, the front drive motor 123F is a permanent magnet synchronous motor, and the rear drive motor 123R is an asynchronous motor.

Referring to FIG. 2A, the front drive motor 123F is disposed between the two front wheels 40F, and the rear drive motor 123R is disposed between the two rear wheels 40R. The output shaft of the front drive motor 123F is parallel to the rotary shaft of the front wheels 40F, and the output shaft of the rear drive motor 123R is parallel to the rotary shaft of the rear wheels 40R. The output shaft of the front drive motor 123F is parallel to the output shaft of the rear drive motor 123R. The front drive motor 123F and the rear drive motor 123R may be aligned along a straight line parallel to the centerline of the electric all-terrain vehicle 10 or may be staggered to prioritize optimizing weight distribution and drive efficiency. Optionally, the front drive motor 123F is disposed in front of the energy storage device, and the rear drive motor 123R is disposed behind the energy storage device, that is to say, the energy storage device is located between the front drive motor 123F and the rear drive motor 123R, thereby ensuring reasonable distribution of front and rear axle loads and improving the stability of the electric all-terrain vehicle 10. Optionally, the output power of the rear drive motor 123R is greater than the output power of the front drive motor 123F. In an example, the ratio of the rated output power of the rear drive motor 123R to the rated output power of the front drive motor 123F is greater than or equal to 1.2 and less than or equal to 1.8. In an example, the ratio of the rated output power of the rear drive motor 123R to the rated output power of the front drive motor 123F is greater than or equal to 1.3 and less than or equal to 1.7. In an example, the ratio of the rated output power of the rear drive motor 123R to the rated output power of the front drive motor 123F is greater than or equal to 1.4 and less than or equal to 1.6. In an example, the ratio of the rated output power of the rear drive motor 123R to the rated output power of the front drive motor 123F is equal to 1.5. In an example, the maximum output power of the front drive motor 123F is greater than or equal to 10 kW, and the maximum output power of the rear drive motor 123R is greater than or equal to 15 kW. In an example, the maximum output power of the front drive motor 123F is greater than or equal to 15 kW. In an example, the maximum output power of the rear drive motor 123R is greater than or equal to 20 kW. In an example, the maximum output power of the front drive motor 123F is equal to 20 kW. In an example, the maximum output power of the rear drive motor 123R is equal to 30 kW. In an example, the rated output power of the front drive motor 123F is greater than or equal to 8 kW. In an example, the rated output power of the rear drive motor 123R is greater than or equal to 12 kW.

As shown in FIG. 3, the power supply assembly 96 is electrically connected to the front driver circuit 125F and the rear driver circuit 125R, respectively to supply electric power to the driving system 12. In an example, the electric all-terrain vehicle 10 further includes a VCU 128, and the VCU 128 is electrically connected to the front controller 124F and a rear controller 124R, respectively so that the total required torque Treq can be distributed to the front driving system 12F and the rear driving system 12R. The VCU 128, the BMS controller 175, the front controller 124F, and the rear controller 124R communicate with each other via a controller area network (CAN) bus. The controllers control the corresponding execution components through electric power to ensure the normal operation of the vehicle. In an example, at least two of the VCU 128, the BMS controller 175, the front controller 124F, and the rear controller 124R are disposed on a circuit board. For example, the VCU 128 and the BMS controller share the battery management circuit board 964, and the front controller 124F and the rear controller 124R are disposed in front of and behind the battery management circuit board 964, respectively.

The VCU 128 is the core control component of the entire electric all-terrain vehicle 10. The VCU 128 collects accelerator pedal signals, brake pedal signals, and other component signals, makes corresponding determinations, and controls the actions of the lower-level component controllers. The VCU 128 collects the driving signals of the driver and vehicle states, manages, schedules, analyzes, and calculates the network information through the CAN bus, performs corresponding energy management according to different configurations of the vehicle model, and implements functions such as vehicle drive control, energy optimization control, brake feedback control, and network management.

In another example, the dual-motor driving system 12 of the electric all-terrain vehicle 10 includes a left drive motor and a right drive motor. For the convenience of the subsequent description, the dual-motor driving system 12 of the electric all-terrain vehicle 10 includes a first drive motor and a second drive motor. The first drive motor and the second drive motor may refer to the front drive motor 123F and the rear drive motor 123R or may refer to the left drive motor and the right drive motor. Correspondingly, the dual-motor driving system 12 of the electric all-terrain vehicle 10 includes a first controller and a second controller, the first controller controls the first drive motor, and the second controller controls the second drive motor. The VCU 128 is disposed between the first controller and the second controller. The following torque distribution method is applicable to both front-to-rear distribution and left-to-right distribution. The VCU 128 distributes torque to two motor controllers 124 (microcontroller units (MCUs)). When the vehicle speed and the total required torque Treq are constant, the VCU 128 adjusts the torque distribution coefficient λ (λ=0 means being driven by the first drive motor, λ=1 means being driven by the second drive motor, and 0<λ<1 means being driven by the first drive motor and the second drive motor simultaneously) to maximize the efficiency of the dual-motor driving system 12 at this operating point (the drive efficiency refers to the ratio of the total output power to the total input power).

Referring to FIG. 12, according to an example of the present application, the core elements of the torque distribution method of the electric all-terrain vehicle 10 with the dual-motor driving system 12 include the following elements.

In E1, the torque distribution coefficients λ that make the dual-motor driving system 12 most efficient with the combinations of the vehicle speed Sutv and the required torque Treq are acquired and made into a torque distribution table.

In E2, the vehicle speed Sutv and the required torque Treq of the vehicle are acquired. In an example of the present application, the vehicle speed Sutv is calculated according to the accelerator pedal opening and/or the brake pedal opening. The required torque Treq refers to the required torque Treq at the input end of a torque combiner, and the required torque Treq includes the drive torque and the brake torque. The drive torque is calculated according to the accelerator pedal opening and the vehicle speed, and the brake torque is calculated according to the brake pedal opening and the vehicle speed. At the same time, the charge and discharge capacity of the energy storage device should also be considered when the drive torque and the brake torque are calculated.

In E3, the lookup of the torque distribution table is performed, and the required torque Treq is distributed to the first drive motor and the second drive motor according to the corresponding distribution coefficient λ so that the first drive motor and the second drive motor output corresponding target torques. The distribution coefficient λ is acquired in a table lookup method. The required torque Treq multipled by (1-λ) is the target torque of the first drive motor, and the required torque Treq multipled by λ is the target torque of the second drive motor.

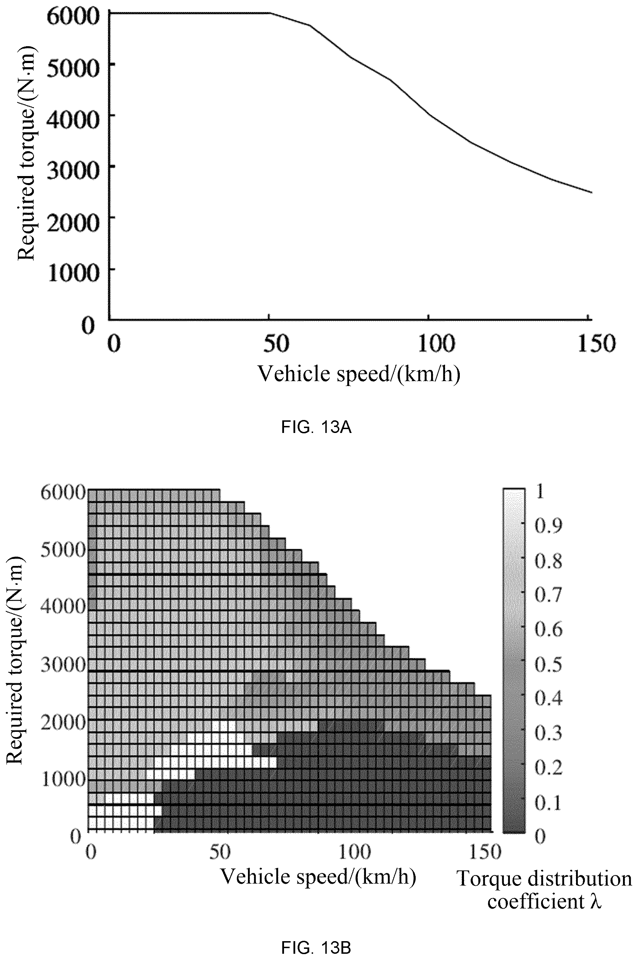

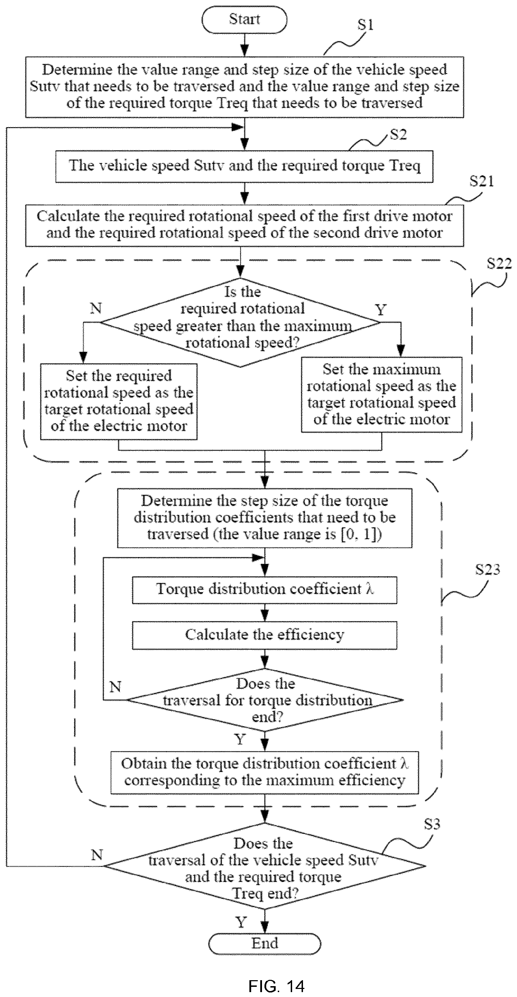

In an example, the vehicle speed-required torque characteristic curve of the electric all-terrain vehicle 10 is shown in FIG. 13A. Among the preceding core elements, E1 may be obtained in advance by experiments and calibrated on the diagram illustrating electric motor efficiency as shown in FIG. 13B. As a specific example, the torque distribution table may be acquired in a traversal optimization method (an interpolation method). For the following steps, reference is made to FIG. 14.

In S1, the value range and step size of the vehicle speed Sutv that needs to be traversed and the value range and step size of the required torque Treq that needs to be traversed are determined so that the matrix of the vehicle speed Sutv and the required torque Treq can be obtained.

In S2, the cells in the matrix are traversed, that is to say, the combinations of the vehicle speed Sutv and the required torque Treq are selected in sequence, and the torque distribution coefficients λ that make the dual-motor driving system 12 most efficient are obtained as follows.

In S21, the required rotational speed of the first drive motor and the required rotational speed of the second drive motor are calculated according to the vehicle speed Sutv.

In S22, the required rotational speed is compared with the maximum rotational speed of the drive motor; if the required rotational speed is less than or equal to the maximum rotational speed of the drive motor, the required rotational speed is set as the target rotational speed, otherwise the maximum rotational speed of the drive motor is set as the target rotational speed.

In S23, a suitable step size is selected, the torque distribution coefficients λ are traversed to find the torque distribution coefficient λ that makes the dual-motor driving system 12 most efficient, and the value range of λ is [0, 1] by default. According to the rotational speeds and currently distributed torques of the first drive motor and the second drive motor, the sum of the current electric motor efficiencies of the first drive motor and the second drive motor is obtained; and the torque distribution ratio corresponding to the maximum sum of electric motor efficiencies is the torque distribution coefficient λ corresponding to the combination of the vehicle speed Sutv and the required torque Treq.

That is to say, the required torque Treq is distributed between the two electric motors according to (1-λ) and λ. The case where the step size is 0.02 is used as an example, λ is 0, 0.02, 0.04, ..., and altogether 51 ways of distribution exist; according to the target rotational speed and torque, 51 groups of data are interpolated on the motor efficiency diagram, namely the motor efficiencies corresponding to the first drive motor and the second drive motor respectively; the sum of efficiencies in each group of data is calculated to obtain 51 groups of data, among which the torque distribution ratio corresponding to the maximum sum of electric motor efficiencies is the torque distribution coefficient λ corresponding to the combination of the vehicle speed Sutv and the required torque Treq.

In S3, if the traversal of the vehicle speed Sutv and the required torque Treq does not end, the traversal continues; if the traversal ends, the entire process ends.

It is to be understood that this method does not limit the step size during the traversal of the torque distribution coefficients, nor does this method limit the range and step size of the vehicle speed Sutv that needs to be traversed and the range and step size of the required torque Treq that needs to be traversed.

According to the torque distribution method for the electric all-terrain vehicle 10 with the dual-motor driving system 12 in an example of the present application, the total required torque Treq can be reasonably distributed to the two drive motors 123 so that the sum of the efficiencies of the two drive motors 123 reaches the optimal value, thereby reducing the power consumption of the vehicle and improving the cruising range of the vehicle. In an example, the total efficiency of the first drive motor and the second drive motor is greater than or equal to 70% in at least 70% of the torque range. In an example, the total efficiency of the first drive motor and the second drive motor is greater than or equal to 60% in at least 80% of the torque range. In an example, the total efficiency of the first drive motor and the second drive motor is greater than or equal to 80% in at least 60% of the torque range. The electric all-terrain vehicle 10 may include the first drive motor and the second drive motor that are the same or may include the first drive motor and the second drive motor that are different.

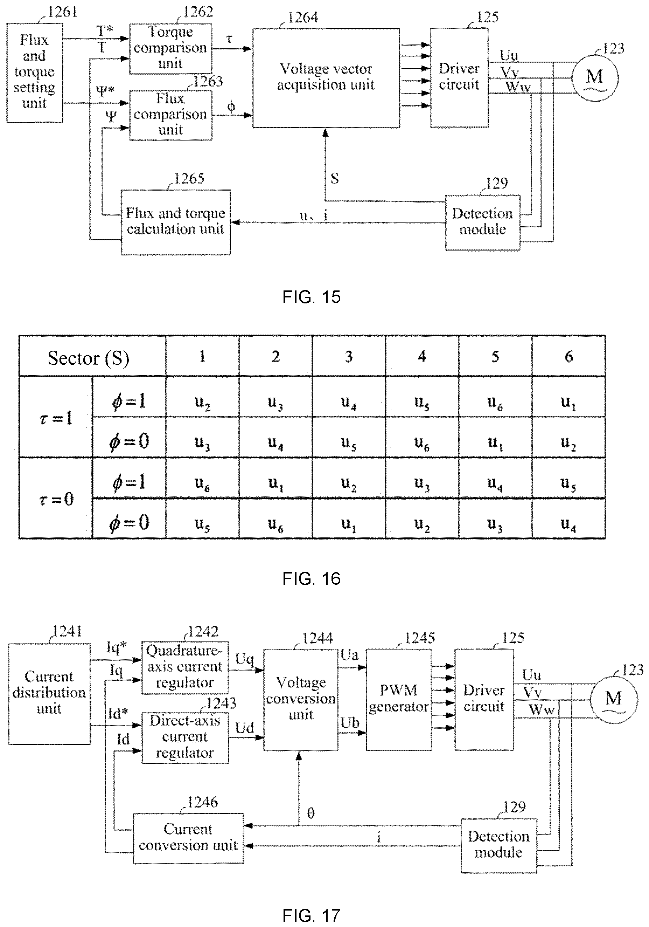

In an example, after two MCUs 124 each receive the target torque distributed by the VCU 128, the two MCUs 124 may control the corresponding electric motors 123 in a direct torque control method. Assuming that the two controllers 124 adopt the same control method, the following only describes the control process of one of the controllers 124 with reference to FIG. 15. The controller 124 is electrically coupled to a driver circuit 125 and a detection module 129. The driver circuit 125 includes multiple switching elements. The detection module 129 is configured to detect the working parameters of the drive motor 123. The controller 124 includes a flux and torque setting unit 1261, a flux and torque calculation unit 1265, a flux comparison unit 1263, a torque comparison unit 1262, and a voltage vector acquisition unit 1264. The flux and torque setting unit 1261 sets the reference value T* of the electric motor torque and the reference value Ψ* of the stator flux with reference to the target torque set by the VCU 128 and other working parameters. In an example, the reference value Ψ* of the stator flux may be a preset value or may be selected among several preset values according to the control mode/electric motor state. The flux and torque calculation unit 1265 calculates the actual value Ψ of the stator flux and the actual value T of the electric motor torque according to the working parameters outputted by the detection module 129. The torque comparison unit 1262 compares the reference value T* of the electric motor torque with the actual value T of the electric motor torque to obtain a comparison result τ. The flux comparison unit 1263 compares the reference value Ψ* of the stator flux with the actual value Ψ of the stator flux to obtain a comparison result φ. The voltage vector acquisition unit 1264 acquires space voltage vectors according to the preceding comparison results τ and φ. According to the signals corresponding to the acquired space voltage vectors, the controllers 124 control the multiple switching elements to be turned on and off. In an example, the voltage vector acquisition unit 1264 may acquire the space voltage vectors in the table lookup method according to the preceding comparison results τ and φ with reference to the sector S where the rotor is located. For example, FIG. 16 shows the space voltage vector switching table (τ is 1, indicating that the torque needs to be increased; φ is 1, indicating that the flux needs to be increased; and τ and φ are 0, indicating that the corresponding control amount needs to be reduced).

In another example, after two MCUs 124 each receive the target torque distributed by the VCU 128, the two MCUs 124 may control the corresponding electric motors in a vector control method. Assuming that the two controllers 124 adopt the same control method, the following only describes the control process of one of the controllers 124 with reference to FIG. 17. The controller 124 is electrically coupled to the driver circuit and the detection module 129. The driver circuit 125 includes multiple switching elements. The detection module 129 is configured to detect the working parameters of the drive motor 123. The controller includes a current distribution unit 1241, a current conversion unit 1246, a quadrature-axis current regulator 1242, a direct-axis current regulator 1243, a voltage conversion unit 1244, and a pulse-width modulation (PWM) generator 1245. The current distribution unit 1241 sets the reference value Iq* of the quadrature-axis current and the reference value Id* of the direct-axis current with reference to the target torque set by the VCU 128. In a specific example, the electric motor 123 is calibrated in advance, and the torques corresponding to different quadrature-axis currents Id and direct-axis currents Iq are measured offline so that a lookup table is generated. In actual operation, the current distribution unit 1241 retrieves the reference value Iq* of the quadrature-axis current and the reference value Id* of the direct-axis current according to the set target torque and performs distribution. The distribution method of the quadrature-axis current and the direct-axis current may adopt the maximum torque per ampere (MTPA) control. The current conversion unit 1246 calculates the actual value Iq of the quadrature-axis current and the actual value Id of the direct-axis current according to the working parameters outputted by the detection module 129, such as the three-phase winding current. This process involves converting the stationary coordinate system into the rotating coordinate system of the rotor of the electric motor. Optionally, the current conversion unit may include the Park transform and the Clarke transform. The quadrature-axis current regulator 1242 may be a proportional-integral (PI) regulator which compares the reference value Iq* of the quadrature-axis current of the electric motor with the actual value Iq and generates a voltage regulation value Uq. The direct-axis current regulator 1243 may be a PI regulator which compares the reference value Id* of the direct-axis current of the electric motor with the actual value Id and generates a voltage regulation value Ud. The voltage conversion unit 1244 converts Uq and Ud in the rotating coordinate system into Ua and Ub in the stationary coordinate system through coordinate transformation, such as the inverse Park transform. The PWM generator 1245 generates PWM signals according to Ua and Ub. Optionally, the PWM generator 1245 may include the inverse Clarke transform. Finally, according to the signals generated by the PWM generator 1245, the controllers 124 control the multiple switching elements to be turned on and off.

It is to be understood that the two motor controllers may adopt different control methods. For example, the first controller adopts vector control and the second controller adopts direct torque control; or the first controller adopts direct torque control and the second controller adopts vector control; or the first controller adopts vector control and the second controller adopts square wave control; or the first controller adopts square wave control and the second controller adopts vector control; or the first controller adopts square wave control and the second controller adopts direct torque control; or the first controller adopts direct torque control and the second controller adopts square wave control. Since square wave control is a traditional control technology, the details are not repeated here. Under square wave control, the motor controller may adjust the PWM, conduction angle, lead angle, or the like according to the target torque distributed by the VCU 128.

In an example, by operating buttons, gears, or the display screen 531 on the control panel 511, the user may enter different driving modes, for example, the sport mode, the normal mode, and the control mode. Different driving modes are set with different acceleration and/or maximum speed limits. In this manner, the user may select different driving modes according to personal preferences, thereby improving the user experience of a riding mower 100. In an example, different driving modes can be achieved by setting different parameters in the control programs of the motor controllers 124, for example, the parameter P of the PI regulator and the reference value Ψ* of the stator flux. In an example, different driving modes can be achieved by adding additional threshold limits in the control programs. In addition, information about different driving modes may be displayed on the display screen 531.

When the electric all-terrain vehicle 10 decelerates or brakes, in the dual-motor driving system 12, one of the drive motors 123 brakes and the other drive motor 123 recovers energy. For example, the absolute value of the reference value of the electric motor torque T* or the direct-axis current Iq* set by one motor controller is larger, thereby achieving quick braking; and the absolute value of the reference value of the electric motor torque T* or the direct-axis current Iq* set by the other motor controller is smaller, thereby recovering as much energy as possible.

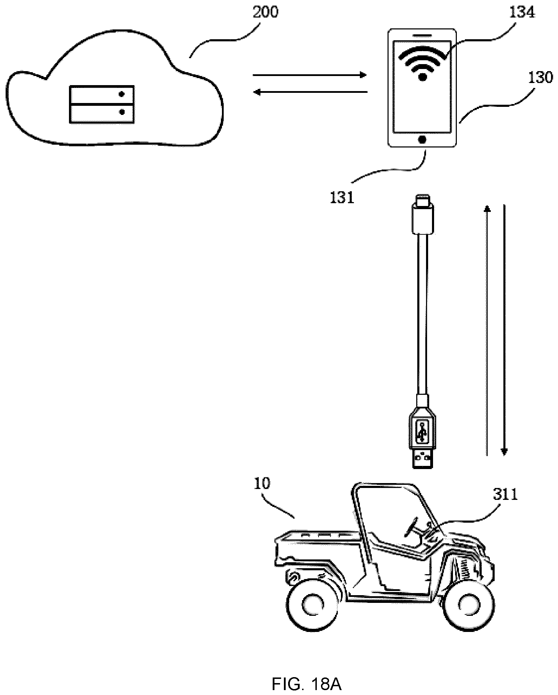

The electric all-terrain vehicle 10 can communicate with a remote device 130 such as a mobile phone. Various manners of achieving communication between the electric all-terrain vehicle 10 and the remote device 130 are provided with reference to FIGS. 18A to 18C. In the present application, the specific communication manners between the electric all-terrain vehicle 10 and the remote device 130 are not limited and include wired connection and wireless connection.

In an example, as shown in FIG. 18A, the electric all-terrain vehicle 10 has a USB data transmission interface 311. If the remote device 130 has a data transmission interface 131, data transmission between the remote device 130 and the electric all-terrain vehicle 10 can be achieved by connecting one end of a data cable to the USB data transmission interface 311 of the electric all-terrain vehicle 10 and connecting the other end of the data cable to the data transmission interface 131 of the remote device 130. It is to be understood that the USB data transmission interface 311 may be combined with the preceding DC output interface into one interface, that is, this interface has the functions of both communication and electrical energy output. Furthermore, based on the communication between the electric all-terrain vehicle 10 and the remote device 130, the remote device 130 further includes a wireless network connection device 134, such as long-term evolution (LTE) or Wi-Fi, which can achieve data transmission with a cloud server 200. The remote device 130 may upload the settings and preferences of the user to the cloud server 200. After acquiring data from the cloud server 200, the remote device 130 transmits the data to the electric all-terrain vehicle 10 via wired transmission. The electric all-terrain vehicle 10 may transmit data to the cloud server 200 through the remote device 130.

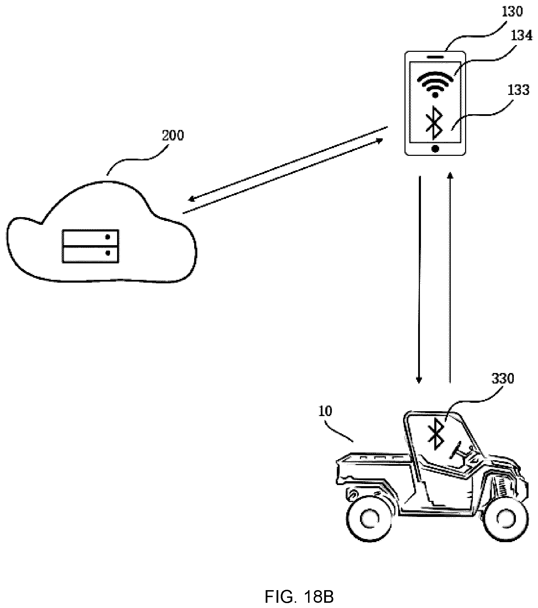

Alternatively, the electric all-terrain vehicle 10 has a wireless networking module that is wirelessly connected to the remote device 130, thereby achieving wireless data transmission. The wireless networking module may be powered by the energy storage device of the power supply assembly 96 or may have its own power supply. In an example, as shown in FIG. 18B, when the distance between the electric all-terrain vehicle 10 and the remote device 130 is relatively small, short-range wireless communication such as Bluetooth, ZigBee, or near-field communication (NFC) can be achieved between the electric all-terrain vehicle 10 and the remote device 130. This solution requires that both the electric all-terrain vehicle 10 and the remote device 130 have matching short-range wireless communication devices. For example, the wireless networking module of the electric all-terrain vehicle 10 is a Bluetooth device 330, and the remote device 130 also has a Bluetooth device 133. The remote device 130 further includes the wireless network connection device 134, such as LTE or Wi-Fi, which can achieve data transmission with the cloud server 200. In this manner, the electric all-terrain vehicle 10 can achieve data interaction with the cloud server 200 through the remote device 130.

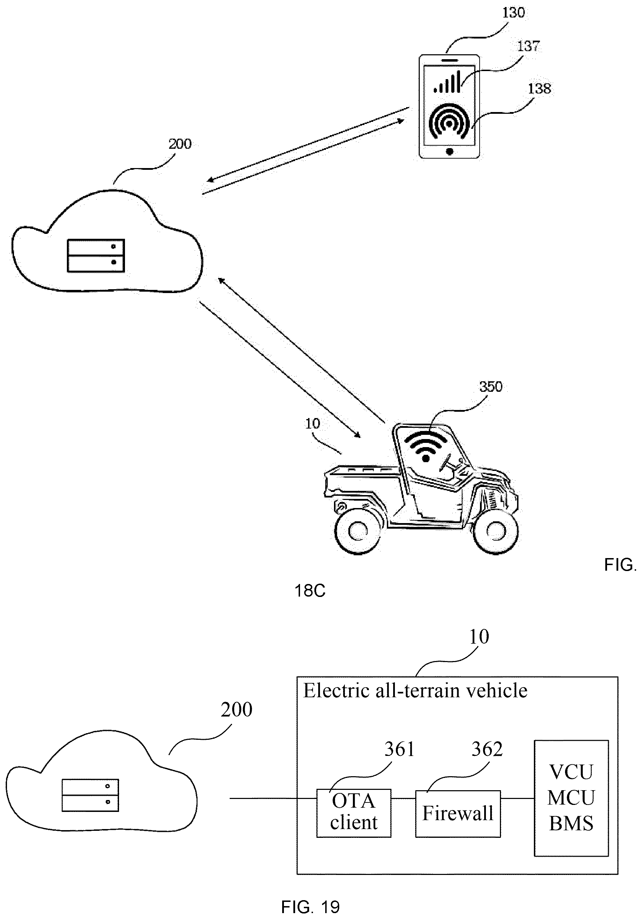

In an example, as shown in FIG. 18C, the wireless networking module of the electric all-terrain vehicle 10 is a wireless network card 350. The remote device 130 such as a mobile phone generally has functions such as a cellular network 137 and a Wi-Fi hotspot 138 so that a cellular network signal received by the remote device 130 is converted into a Wi-Fi signal and the Wi-Fi signal is sent out. The electric all-terrain vehicle 10 has the wireless network card 350. In this manner, the electric all-terrain vehicle 10 can achieve wireless communication with the cloud server 200 through the Wi-Fi network created by the Wi-Fi hotspot 138 of the remote device 130.

It is to be understood that the preceding connection manners are not in conflict with each other, and the electric all-terrain vehicle 10 can adopt more than one of the preceding connection manners, from which the user can select the connection manner according to actual conditions.

The traditional all-terrain vehicle electronics come with all the software pre-loaded. After the all-terrain vehicle is delivered to a customer, the vehicle software is generally not updated unless an unacceptable software problem exists. Once a software problem is discovered, the vehicles are recalled, and after-sales service personnel upgrade the software for each problematic vehicle one by one, resulting in a huge upgrade cost. By means of a communication connection with the remote device 130 or the cloud server 200, the electric all-terrain vehicle 10 can adopt OTA technology to solve the preceding problem. The electric all-terrain vehicle 10 with OTA can remotely upgrade the vehicle system and functions through the cloud or use the remote device 130 to download the upgrade package to upgrade the vehicle system and functions. OTA technology requires the cloud server 200 and the electric all-terrain vehicle 10 to be deployed simultaneously, and the OTA architecture is shown in FIG. 19. When authorized, the updated software enters the electric all-terrain vehicle 10 from the cloud server 200 via an OTA client 361. After passing through a firewall 362, the updated software is distributed to the controllers that need to be upgraded, including the VCU, the MCU, the BMS, and the like.

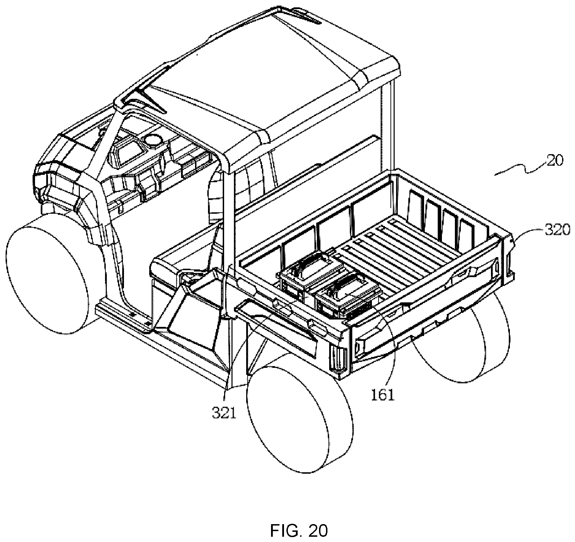

Referring to FIG. 20, the parts or components of an electric all-terrain vehicle 20 that are the same as or similar to those of the electric all-terrain vehicle 10 are not described in detail here. Compared with the trunk 300 of the electric all-terrain vehicle 10, a trunk 320 of the electric all-terrain vehicle 20 has an additional battery pack interface 321, and the battery pack interface 321 may be a single-sided extension pin, a semi-open battery pack accommodation cavity, or a deformable battery pack mounting portion, such as a retractable, foldable, and openable/closable battery pack mounting portion, for coupling the battery pack or receiving the battery pack. The battery pack here may be the preceding first battery pack 161 and, of course, may also be the preceding second battery pack 152 or another battery pack. The battery pack interface 321 is disposed in the trunk 320, for example, fixed to the bottom or inner wall of the trunk 320. One or more battery pack interfaces 321 may be provided in the trunk 320. In an example, if the first battery packs 161 are connected in series in pairs for discharging, then the battery pack interfaces 321 need to be provided in pairs, that is to say, two, four, six, or 2n battery pack interfaces 321 are provided in the trunk 320. In an example, the user may select an appropriate number of battery pack interfaces 321 to satisfy requirements. Although not shown in the figures, it is to be understood that the battery pack interface 321 includes at least a terminal assembly that mates with the first battery pack 161 so that the battery pack interface 321 can be electrically connected to the first battery pack 161. In this manner, the electric all-terrain vehicle 20 can be powered by the first battery packs 161 coupled to or electrically connected to the battery pack interfaces 321, that is to say, the user can achieve energy expansion of the electric all-terrain vehicle 20 through the trunk 320, for example, supplying power to the driving system of the electric all-terrain vehicle 20.

Compared with the preceding energy storage devices disposed below the seat, above or below the vehicle frame, or at other positions, the energy storage devices mounted to the trunk 320 are more flexible and convenient for the user to move and replace. This energy expansion manner is particularly convenient for the user who has higher battery life requirements. Particularly, the first battery packs 161 and the energy storage devices of other devices can be used interchangeably. Referring to FIG. 9A, the first battery packs 161 can be flexibly mounted and removed to supply power to the wheeled power tool 20a such as a tractor, a riding mower, or a push garden tool.

Therefore, the user can remove the first battery packs 161 from other devices and mount the first battery packs 161 to the trunk 320 to improve the endurance of the electric all-terrain vehicle 20 without having to purchase more first battery packs 161. In addition, the first battery packs 161 may be used in the preceding energy station 310. The first battery packs 161 in the trunk 320 may be removed by the user to serve as the power supply of the energy station 310, or the first battery packs 161 may be removed from the energy station 310 and mounted to the battery pack interfaces 321 to supply power to the electric all-terrain vehicle 20. Of course, in addition to the energy expansion in the trunk 320, the electric all-terrain vehicle 20 may still have energy storage devices with the same configurations as the energy storage devices in the preceding electric all-terrain vehicle 10. These energy storage devices are mounted to the vehicle frame, for example, at least partially located below the seat or above or below the vehicle frame, to supply power to the electric all-terrain vehicle 20, for example, supply power to the driving system of the electric all-terrain vehicle 20. In an example, these energy storage devices and the first battery packs 161 mounted to the trunk 320 are connected in parallel for discharge. In an example, the discharge voltage of the energy storage devices and the first battery packs 161 connected in parallel is greater than or equal to 80 V. In an example, the discharge voltage of the energy storage devices and the first battery packs 161 connected in parallel is greater than or equal to 100 V. In an example, the discharge voltage of the energy storage devices and the first battery packs 161 connected in parallel is greater than or equal to 110 V. The discharge voltage in the present application refers to the discharge voltage when the battery packs are close to being fully charged. When the electric all-terrain vehicle 20 is equipped with an OBC, the OBC can not only charge the energy storage devices but also charge the first battery packs 161 in the trunk 320.

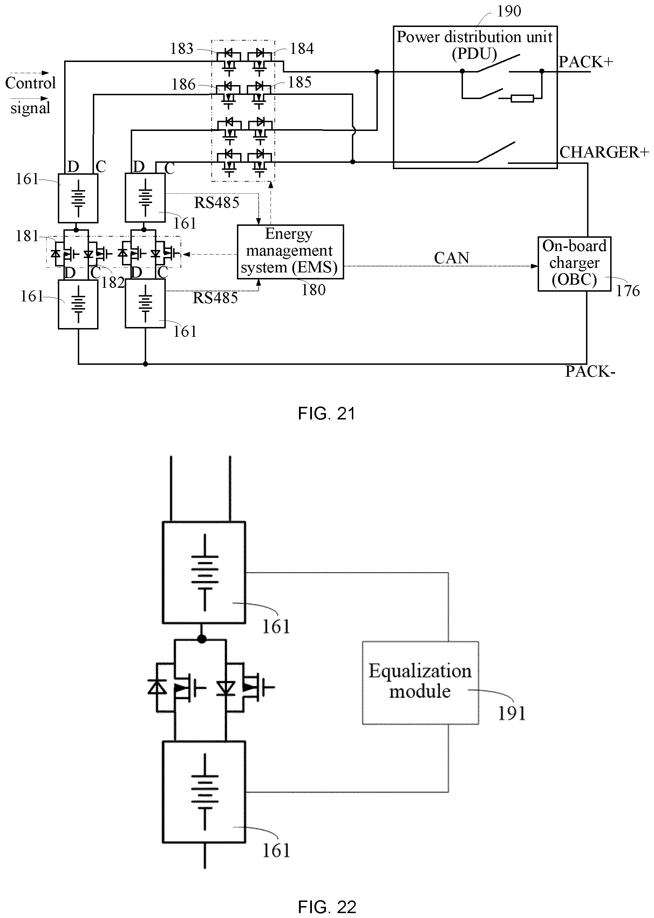

In conjunction with FIG. 21, a power supply assembly formed by four battery packs in which every two battery packs are connected in series to form two series paths and the two series paths are connected in parallel is described below and is applicable to the electric all-terrain vehicle 10 and the electric all-terrain vehicle 20 described above. The battery pack may specifically be the first battery pack 161. In this example, the rated voltage of the first battery pack 161 is 56 V and, of course, may also be 40 V, 44 V, 48 V, 52 V, 60 V, or the like. Two first battery packs 161 are connected in series to form a series path, and two series paths are connected in parallel to form the entire main topological structure. The discharge voltage of the series path is greater than or equal to 80 V. In this example, the first battery pack 161 is a battery pack whose charging interface is different from the discharging interface, that is to say, the charging interface and the discharging interface are different interfaces. Specifically, the first battery pack 161 has a charging positive terminal and a discharging positive terminal that are independent of each other; and a shared negative terminal for charging and discharging. Alternatively, the first battery pack 161 may have a charging negative terminal and a discharging negative terminal that are independent of each other; and a shared positive terminal for charging and discharging. Alternatively, the first battery pack 161 may have a charging negative terminal and a discharging negative terminal that are independent of each other; and a charging positive terminal and a discharging positive terminal that are independent of each other.

As shown in FIG. 21, the first battery pack 161 has a charging positive terminal and a discharging positive terminal that are independent of each other. Correspondingly, the positive electrode of the first battery pack 161 has two connecting wires, D denotes a discharging circuit, and C denotes a charging circuit. The power supply assembly further includes an EMS 180, which may specifically be the preceding BMS controller 175. The EMS 180 manages the first battery packs 161 by controlling the on and off of switching devices, such as metal-oxide-semiconductor field-effect transistors (hereinafter referred to as MOS transistors). The states of the first battery packs 161 are sent to the EMS 180 via communication signals, such as RS485 communication signals. The two first battery packs 161 in each series path are connected via a pair of MOS transistors. The series path located on the outer side in the figure is used as an example. The two first battery packs 161 are electrically connected to a discharging MOS transistor 181 and a charging MOS transistor 182, where the discharging MOS transistor 181 is disposed on the discharging circuit, and the charging MOS transistor 182 is disposed on the charging circuit. During charging, the charging MOS transistor 182 is turned on and the discharging MOS transistor 181 is turned off. During discharging, the discharging MOS transistor 181 is turned on and the charging MOS transistor 182 is turned off. Further, the positive electrode of each series path is connected to two groups of MOS transistors, and the EMS 180 controls the conduction combination of the MOS transistors to control the charging circuit and discharging circuit of the series path. The series path located on the outer side in the figure is used as an example. A MOS transistor 183 and a MOS transistor 184 are provided back to back on the discharging circuit. When the MOS transistor 183 is turned on, the discharging circuit is allowed to discharge. When the MOS transistor 184 is turned on, the first battery packs 161 on the discharging circuit are allowed to recover energy. A MOS transistor 185 and a MOS transistor 186 are provided back to back on the charging circuit. When the MOS transistor 185 is turned on, the charging circuit is allowed to charge. The MOS transistor 186 is usually in a disconnected state to prevent a reverse current flow.

The positive electrode of an OBC 176 is connected to the positive electrode of the series path, and the negative electrode of the OBC 176 is connected to the negative electrode of the series path, thereby providing a charge current to the first battery packs 161. A power distribution unit (PDU) 190 includes a switch for connecting or disconnecting a charging circuit and a switch for connecting or disconnecting a discharging circuit. When the electric all-terrain vehicle 10 has two electric motors, the PDU 190 may be provided with two discharge switches. Through the preceding circuit design and the configuration of the first battery pack 161 whose charging interface is different from the discharging interface, the charge current and the discharge current can be managed separately, thereby improving the reliability of the power system of the electric all-terrain vehicle 20.

When the battery packs connected in series for discharge have different SoC or voltages, even if the preceding device is used to avoid a reverse current flow, the discharge capacity or endurance is adversely affected. To better solve this problem, in an example, the power supply assembly may further include an equalization module 191. Specifically, as shown in FIG. 22, the first battery packs 161 in the series path are additionally connected to the equalization module 191 to achieve active equalization adjustment of the battery packs in idle states. The equalization module 191 may be a DC-DC converter. When the EMS 180 detects an imbalance in SoC or voltage between the first battery packs 161 and the first battery packs 161 are idle, the equalization module 191 is started and transfers power from the battery pack with more power to the battery pack with less power to achieve SoC equalization of battery packs. Alternatively, when the EMS 180 detects a voltage imbalance between the first battery packs 161 and the first battery packs 161 are idle, the equalization module 191 is started and transfers power from the battery pack with a higher voltage to the battery pack with a lower voltage to achieve voltage equalization of battery packs.

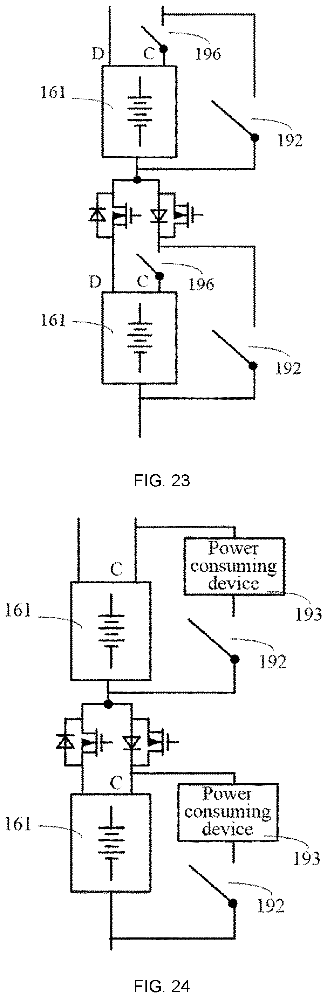

In another example, referring to FIG. 23, each battery pack may be additionally equipped with a bypass circuit. Specifically, a switch 192 is connected in parallel to each battery pack to achieve individual charging of the battery pack when the charging between the battery packs is uneven. The first battery pack 161 in the figure is used as an example. During charging, when one first battery pack 161 is fully charged first or has a higher voltage, the switch 192 of the parallel circuit of this first battery pack 161 is turned on to prevent current from flowing into this first battery pack 161; at the same time, the switch 192 of the parallel circuit of the first battery pack 161 that is not fully charged or has a lower voltage is turned off so that the first battery pack 161 that is not fully charged or has a lower voltage continues being charged. To prevent the first battery pack 161 from short-circuiting, a switch 196 needs to be added to the positive electrode of the charging circuit of each first battery pack 161. When the switch 192 is turned on, the switch 196 is turned off to prevent the battery pack from short-circuiting. When the switch 192 is turned off, the switch 196 is turned on to receive the charge current. The switch 192 and the switch 196 may be MOS transistors or other switches, and the preceding control method may be implemented by the EMS 180. By charging some battery packs separately, the SoC equalization or voltage equalization between the battery packs can be achieved.

In addition to charging some battery packs separately, it is also feasible to achieve the power equalization or voltage equalization between the battery packs by discharging some battery packs separately. In another example, referring to FIG. 24, a power consuming device 193 may be further provided on the parallel circuit of each battery pack. Specifically, the power consuming device 193 may be a resistor connected in series with the switch 192. The first battery pack 161 in the figure is used as an example. When the first battery packs 161 are idle and the SoC or voltage of one first battery pack 161 is higher, the switch 192 of the parallel circuit of this first battery pack 161 is turned on so that the power of this first battery pack 161 is consumed by the power consuming device 193. By consuming the excess power of some battery packs, the SoC equalization or voltage equalization between the battery packs can be achieved. Further, the power consuming device 193 may be configured to be a preheating module, thereby implementing a low-temperature preheating function. When the ambient temperature is relatively low, the switch 192 is turned on to connect the first battery pack 161 to the preheating module so that low-temperature preheating of the battery pack can be achieved. The preheating module may be an electric heater such as a heating resistor, a heating wire, or a hot plate. The preceding control method may be implemented by the EMS 180. For the convenience of the description and understanding, the first battery pack 161 is used as an example, but the preceding control method is also applicable to other types of battery packs.

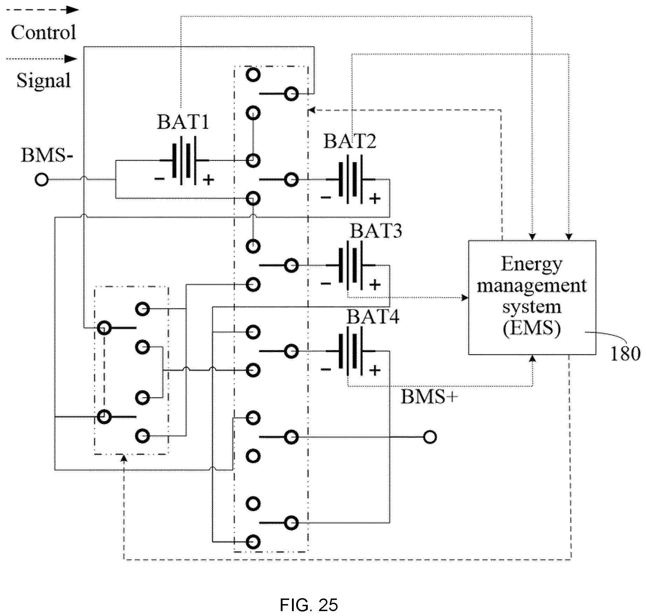

In another example, switch groups may be added to the power supply assembly to flexibly switch the series-parallel combination relationship of four battery packs so that the difference in SoC or voltage between the battery packs connected in series is minimized among all possible combinations of the current two series circuits, thereby alleviating the problem of battery pack nonequalization. Referring to FIG. 25, eight single pole, double throw switches are divided into two groups. A first switch group 194 includes six single pole, double throw switches, and a second switch group 195 includes two single pole, double throw switches. The switches in each switch group are in the same state, that is to say, the switches in the same group are controlled by a single signal. A control unit acquires the SoC or voltage information of the four battery packs and outputs control signals to control the first switch group 194 and the second switch group 195. In this example, the control unit may be the preceding EMS 180. BMS+ denotes the positive electrode of the entire system, and BMS- denotes the negative electrode of the entire system.

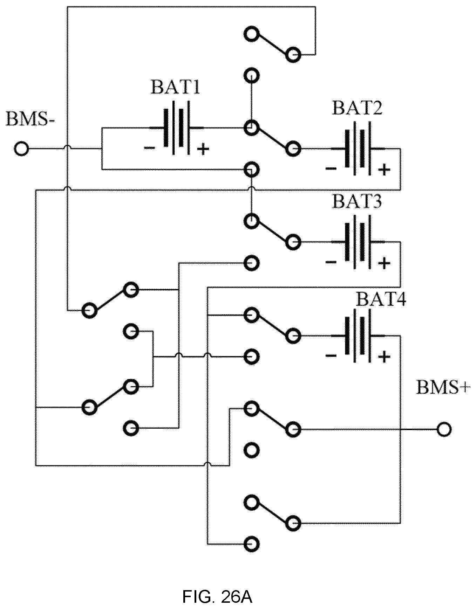

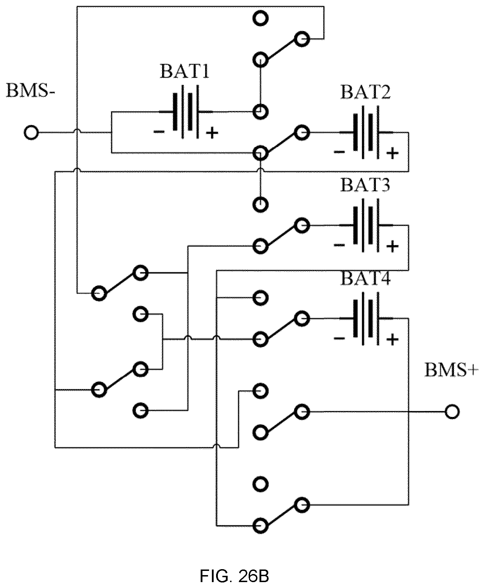

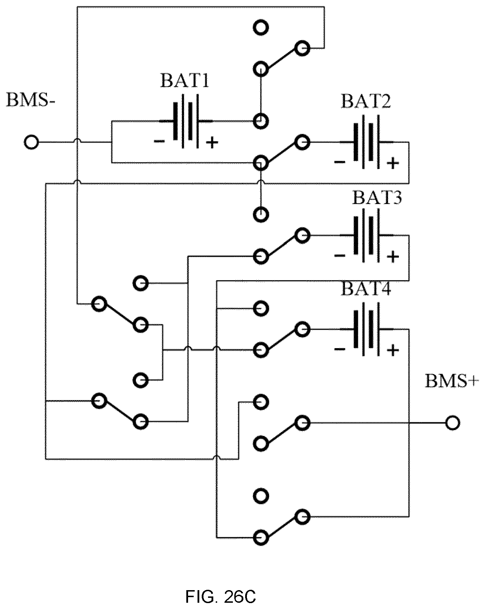

For the convenience of the description, the four battery packs are labeled as BAT1, BAT2, BAT3, and BAT4, respectively. The battery pack illustrated in the figure has only one positive terminal and one negative terminal and may be understood as the preceding second battery pack 152 or another battery pack. Optionally, the voltage of each battery pack is greater than or equal to 40 V, and the discharge voltage of two battery packs connected in series is greater than or equal to 80 V. Every two of the four battery packs are connected in series to form two series paths and the two series paths are connected in parallel. Three series-parallel combination manners exist. In the first combination, BAT1 and BAT2 are connected in series, and BAT3 and BAT4 are connected in series. In the second combination, BAT1 and BAT3 are connected in series, and BAT2 and BAT4 are connected in series. In the third combination, BAT1 and BAT4 are connected in series, and BAT2 and BAT3 are connected in series. As shown in FIGS. 26A to 26C, by changing the states of the first switch group 194 and the second switch group 195, the three series-parallel combination manners can be achieved separately. FIG. 26A shows that BAT1 and BAT2 are connected in series, BAT3 and BAT4 are connected in series, and the two series paths are connected in parallel. FIG. 26B shows that BAT1 and BAT3 are connected in series, BAT2 and BAT4 are connected in series, and the two series paths are connected in parallel. FIG. 26C shows that BAT1 and BAT4 are connected in series, BAT2 and BAT3 are connected in series, and the two series paths are connected in parallel. The control unit may select which series-parallel combination to use based on the criteria of minimizing the sum of SoC differences or voltage differences between the battery packs in the two series paths. The preceding solution may be expanded, is not limited to the combination of four battery packs in which every two battery packs are connected in series to form two series paths and the two series paths are connected in parallel, and may be expanded to the combination of more battery packs in which every two battery packs are connected in series to form multiple series paths and the multiple series paths are connected in parallel.

In more examples, through the setting and switching of switch groups with different configurations, the series-parallel combination relationship of multiple battery packs of the power supply assembly is not limited to the combination of being connected in series and then in parallel and may also be the combination of being connected in parallel and then in series. In addition, two or more series paths are not limited to being connected in parallel, and the two or more series paths may be connected in series to further increase the discharge voltage or charge voltage of the power supply assembly. For example, the electric all-terrain vehicle may switch the series-parallel combination relationship of multiple battery packs based on the load. The control unit may be configured to, when the load is less than or equal to a first threshold, control the switch groups such that two or more series paths are connected in parallel and when the load is greater than or equal to the first threshold, control the switch groups such that two or more series paths are connected in series.

In addition, other compositions and functions of the electric all-terrain vehicle according to the examples of the present application are known to those of ordinary skill in the art, which are not described in detail here to reduce redundancy.

In the description of the specification, the description of reference terms "one embodiment", "some embodiments", "example", "specific example", "some examples", and the like means a specific feature, a structure, a material, or a characteristic described in conjunction with the embodiment or the example is included in at least one embodiment or example of the present application. In this detailed description, the illustrative description of the preceding terms does not necessarily refer to the same embodiment or example. Moreover, the described specific feature, structure, material, and characteristic may be combined in an appropriate manner in any one or more embodiments or examples.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An electric all-terrain vehicle, comprising:
a vehicle frame;
a seat for a user to sit on, the seat being mounted to the vehicle frame;
a traveling wheel set supporting the vehicle frame and comprising front wheels and rear wheels;
a driving system for driving the traveling wheel set; and
a power supply assembly comprising an energy storage device for supplying electric power to at least the driving system;
wherein the energy storage device is detachably mounted to the vehicle frame, and the energy storage device is further configured to be detachable from the vehicle frame to supply power to a power tool.

2. The electric all-terrain vehicle of claim 1, further comprising a trunk capable of accommodating the power tool.

3. The electric all-terrain vehicle of claim 1, wherein the energy storage device comprises cell units, and a cell unit of the cell units is one of a lithium iron phosphate battery, a ternary lithium battery, and a lead-acid battery.

4. The electric all-terrain vehicle of claim 1, wherein the energy storage device is at least partially disposed below the seat.

5. The electric all-terrain vehicle of claim 1, wherein the energy storage device comprises a first battery pack, and at least two of the first battery packs are connected in series for discharge.

6. The electric all-terrain vehicle of claim 1, wherein a discharge voltage of the power supply assembly is greater than or equal to 80 V.

7. The electric all-terrain vehicle of claim 5, wherein the energy storage device further comprises a second battery pack, and the first battery pack and the second battery pack are different.

8. The electric all-terrain vehicle of claim 7, wherein at least one of chemical properties, rated voltages, rated capacities, charge and discharge rates, and operating temperatures of the first battery pack and the second battery pack are different.

9. The electric all-terrain vehicle of claim 5, wherein a rated voltage of the first battery pack is greater than or equal to 40 V, and the first battery pack belongs to a first power platform and supplies power to a wheeled power tool, and the wheeled power tool comprises a riding mower, a tractor, and a push garden tool.

10. The electric all-terrain vehicle of claim 7, wherein a rated voltage of the second battery pack is less than or equal to 24 V, and the second battery pack belongs to a second power platform and supplies power to a handheld power tool, and the handheld power tool comprises a string trimmer, a hedge trimmer, a blower, a chainsaw, an electric drill, an electric hammer, an electric saw, an angle grinder, and a sander.

11. An electric all-terrain vehicle, comprising:
a vehicle frame;
a seat used for a user to sit on and mounted to the vehicle frame;
a traveling wheel set supporting the vehicle frame and comprising front wheels and rear wheels;
a driving system for driving the traveling wheel set;
a power supply assembly comprising an energy storage device and used for supplying electric power to at least the driving system;
an operating assembly for the user to operate to control at least a speed and a direction of the electric all-terrain vehicle; and
a vehicle control unit (VCU) electrically connected to the operating assembly;
wherein the driving system comprises a first drive motor and a second drive motor, and the VCU is configured to distribute torque to the first drive motor and the second drive motor according to a principle of optimal efficiency so that total efficiency of the first drive motor and the second drive motor is greater than or equal to 70% in at least 70% of a torque range.

12. The electric all-terrain vehicle of claim 11, further comprising a first controller for driving the first drive motor and a second controller for driving the second drive motor, wherein the VCU is electrically connected to the first controller and the second controller and distributes the torque to the first controller and the second controller.

13. The electric all-terrain vehicle of claim 12, wherein the VCU queries a torque distribution coefficient according to a vehicle speed and required torque of the electric all-terrain vehicle in a table lookup method.

14. The electric all-terrain vehicle of claim 13, wherein the torque distribution coefficient maximizes the total efficiency of the first drive motor and the second drive motor.

15. The electric all-terrain vehicle of claim 11, wherein the first drive motor and the second drive motor are different.

16. The electric all-terrain vehicle of claim 11, wherein the first drive motor drives the front wheels, and the second drive motor drives the rear wheels.

17. The electric all-terrain vehicle of claim 12, wherein the first controller and the second controller adopt one of direct torque control, vector control, and square wave control.

18. The electric all-terrain vehicle of claim 11, wherein the second drive motor is a permanent magnet synchronous motor or an asynchronous motor.

19. The electric all-terrain vehicle of claim 11, wherein the first drive motor is a permanent magnet synchronous motor or an asynchronous motor.

20. The electric all-terrain vehicle of claim 11, wherein the VCU is disposed between a first controller and a second controller.

21. An electric all-terrain vehicle, comprising:
a vehicle frame;
a seat used for a user to sit on and mounted to the vehicle frame;
a traveling wheel set supporting the vehicle frame and comprising front wheels and rear wheels;
a suspension assembly dynamically connecting the vehicle frame to the traveling wheel set and used for absorbing shocks for the electric all-terrain vehicle;
a driving system for driving the traveling wheel set; and
a power supply assembly comprising an energy storage device and used for supplying electric power to at least the driving system;
wherein the driving system comprises a first drive motor and a second drive motor, the first drive motor drives the front wheels, the second drive motor drives the rear wheels, and the first drive motor and the second drive motor are different.

22. The electric all-terrain vehicle of claim 21, wherein the second drive motor is a permanent magnet synchronous motor or an asynchronous motor.

23. The electric all-terrain vehicle of claim 21, wherein the first drive motor is a permanent magnet synchronous motor or an asynchronous motor.

24. The electric all-terrain vehicle of claim 21, wherein maximum output power of the first drive motor is greater than or equal to 10 kW, and maximum output power of the second drive motor is greater than or equal to 20 kW.

25. The electric all-terrain vehicle of claim 24, wherein a ratio of rated output power of the second drive motor to rated output power of the first drive motor is greater than or equal to 1.2 and less than or equal to 1.8.

26. The electric all-terrain vehicle of claim 21, further comprising a vehicle control unit (VCU) and an operating assembly for the user to operate to control at least a speed and a direction of the electric all-terrain vehicle.

27. The electric all-terrain vehicle of claim 26, further comprising a first controller for driving the first drive motor and a second controller for driving the second drive motor, wherein the VCU is electrically connected to the first controller and the second controller and distributes required torque to the first controller and the second controller.

28. The electric all-terrain vehicle of claim 27, wherein the first controller and the second controller adopt one of direct torque control, vector control, and square wave control.

29. The electric all-terrain vehicle of claim 21, wherein the energy storage device comprises a plurality of first battery packs, and at least two of the plurality of first battery packs are discharged in series.

30. The electric all-terrain vehicle of claim 29, wherein a rated voltage of a first battery pack of the plurality of first battery packs is greater than or equal to 40 V.

31. An electric all-terrain vehicle, comprising:
a vehicle frame;
a seat used for a user to sit on and mounted to the vehicle frame;
a trunk disposed behind the seat and used for carrying an item;
a traveling wheel set supporting the vehicle frame and comprising front wheels and rear wheels;
a suspension assembly dynamically connecting the vehicle frame to the traveling wheel set and used for absorbing shocks for the electric all-terrain vehicle;
a driving system for driving the traveling wheel set; and
a power supply assembly comprising an energy storage device and used for supplying electric power to at least the driving system;
wherein the energy storage device comprises first battery packs and second battery packs, a first battery pack of the first battery packs comprises cell units, and a cell unit of the cell units is a lithium iron phosphate battery.

32. The electric all-terrain vehicle of claim 31, wherein the first battery packs or the second battery packs are disposed below the seat.

33. The electric all-terrain vehicle of claim 31, wherein the first battery packs or the second battery packs are disposed between the seat and the trunk.

34. The electric all-terrain vehicle of claim 31, wherein the first battery packs or the second battery packs are disposed below the trunk.

35. The electric all-terrain vehicle of claim 31, wherein the first battery packs or the second battery packs are disposed on two sides of the vehicle frame.

36. The electric all-terrain vehicle of claim 31, wherein a rated voltage of the first battery pack is greater than or equal to 40 V, the first battery packs belong to a first power platform and supply power to a wheeled power tool, and the wheeled power tool comprises a riding mower, a tractor, and a push garden tool.

37. The electric all-terrain vehicle of claim 31, wherein a rated voltage of a second battery pack of the second battery packs is less than or equal to 24 V, the second battery packs belong to a second power platform and supply power to a handheld power tool, and the handheld power tool comprises a string trimmer, a hedge trimmer, a blower, a chainsaw, an electric drill, an electric hammer, an electric saw, an angle grinder, and a sander.

38. The electric all-terrain vehicle of claim 31, wherein the energy storage device is configured to be a built-in cell module.

39. The electric all-terrain vehicle of claim 31, wherein at least two of the first battery packs are discharged in series.

40. The electric all-terrain vehicle of claim 31, wherein a total voltage of at least two of the second battery packs connected in series reaches a rated voltage of the first battery pack.

41. An electric all-terrain vehicle, comprising:
a vehicle frame;
a seat used for a user to sit on and mounted to the vehicle frame;
a trunk disposed behind the seat and used for carrying an item;
a traveling wheel set supporting the vehicle frame and comprising front wheels and rear wheels;
a suspension assembly dynamically connecting the vehicle frame to the traveling wheel set and used for absorbing shocks for the electric all-terrain vehicle;
a driving system used for driving the traveling wheel set and the driving system comprises a front drive motor and a rear drive motor; anda power supply assembly comprising an energy storage device and used for supplying electric power to at least the driving system;
wherein the energy storage device is disposed between the front drive motor and the rear drive motor.

42. The electric all-terrain vehicle of claim 41, wherein the energy storage device comprises first battery packs, and the first battery packs are at least partially disposed below the seat.

43. The electric all-terrain vehicle of claim 42, wherein the energy storage device further comprises second battery packs, and the second battery packs and the first battery packs are different in at least one operating parameter.

44. The electric all-terrain vehicle of claim 43, wherein the second battery packs are disposed at a position different from a position where the first battery packs are disposed.

45. The electric all-terrain vehicle of claim 44, wherein the first battery packs or the second battery packs are configured to be detachable from the electric all-terrain vehicle to supply power to a power tool.

46. The electric all-terrain vehicle of claim 44, wherein the first battery pack is configured to charge the second battery pack.

47. The electric all-terrain vehicle of claim 42, wherein the energy storage device further comprises a built-in cell module, and the built-in cell module is nondetachable.

48. The electric all-terrain vehicle of claim 41, further comprising a direct current (DC) output interface for charging a DC device.

49. The electric all-terrain vehicle of claim 48, wherein the DC output interface has a communication function.

50. The electric all-terrain vehicle of claim 41, further comprising an alternating current (AC) output interface for supplying power to an AC device.

51. An electric all-terrain vehicle, comprising:
a vehicle frame;
a seat used for a user to sit on and mounted to the vehicle frame;
a trunk disposed behind the seat and used for carrying an item;
a traveling wheel set supporting the vehicle frame and comprising front wheels and rear wheels;
a suspension assembly dynamically connecting the vehicle frame to the traveling wheel set and used for absorbing shocks for the electric all-terrain vehicle;
a driving system for driving the traveling wheel set;
a power supply assembly comprising an energy storage device and used for supplying electric power to at least the driving system; and
a controller for controlling at least the driving system;
wherein the electric all-terrain vehicle further has a wireless networking module powered by the power supply assembly and configured to be wirelessly connected to a remote device.

52. The electric all-terrain vehicle of claim 51, wherein the wireless networking module is a Bluetooth device.

53. The electric all-terrain vehicle of claim 51, wherein the wireless networking module is a wireless network card.

54. The electric all-terrain vehicle of claim 51, wherein the electric all-terrain vehicle is configured to communicate with a cloud server via the wireless networking module.

55. The electric all-terrain vehicle of claim 54, further comprising an over-the-air (OTA) upgrade client, wherein the OTA upgrade client acquires an upgrade package from the cloud server to update the controller.

56. The electric all-terrain vehicle of claim 51, further comprising an OTA upgrade client, wherein the OTA upgrade client acquires an upgrade package from the remote device to update the controller.

57. The electric all-terrain vehicle of claim 51, wherein the energy storage device comprises first battery packs and second battery packs.

58. The electric all-terrain vehicle of claim 57, wherein the first battery packs supply electric power to the driving system, and the second battery packs supply power to the controller and the wireless networking module.

59. The electric all-terrain vehicle of claim 58, wherein a rated voltage of a first battery pack of the first battery packs is greater than or equal to 40 V, the first battery packs belong to a first power platform and supply power to a wheeled power tool, and the wheeled power tool comprises a riding mower, a tractor, and a push garden tool.

60. The electric all-terrain vehicle of claim 58, wherein a rated voltage of a second battery pack of the second battery packs is less than or equal to 24 V, the second battery packs belong to a second power platform and supply power to a handheld power tool, and the handheld power tool comprises a string trimmer, a hedge trimmer, a blower, a chainsaw, an electric drill, an electric hammer, an electric saw, an angle grinder, and a sander.

61. An electric all-terrain vehicle, comprising:
a vehicle frame;
a seat used for a user to sit on and mounted to the vehicle frame;
a trunk disposed behind the seat and used for carrying an item;
a traveling wheel set supporting the vehicle frame and comprising front wheels and rear wheels;
a suspension assembly dynamically connecting the vehicle frame to the traveling wheel set and used for absorbing shocks for the electric all-terrain vehicle;
a driving system for driving the traveling wheel set; and
a power supply assembly comprising an energy storage device and used for supplying electric power to at least the driving system;
wherein the energy storage device comprises a plurality of first battery packs, and at least two of the plurality of first battery packs are discharged in series.

62. The electric all-terrain vehicle of claim 61, wherein the plurality of first battery packs are connected in series and then discharged in parallel.

63. The electric all-terrain vehicle of claim 61, wherein the energy storage device further comprises second battery packs, and the second battery packs and the plurality of first battery packs are different in at least one operating parameter.

64. The electric all-terrain vehicle of claim 63, wherein a total voltage of at least two of the second battery packs connected in series is equivalent to a rated voltage of a first battery pack of the plurality of first battery packs.

65. The electric all-terrain vehicle of claim 61, wherein the power supply assembly further comprises a charging interface for charging the energy storage device.

66. The electric all-terrain vehicle of claim 65, wherein the charging interface is configured to connect an external power supply or a solar panel.

67. The electric all-terrain vehicle of claim 65, wherein the power supply assembly further comprises a charging circuit for first charging the energy storage device with a lower voltage.

68. The electric all-terrain vehicle of claim 61, wherein a rated capacity of a first battery pack of the plurality of first battery packs is greater than or equal to 2 kWh.

69. The electric all-terrain vehicle of claim 61, wherein a rated voltage of a first battery pack of the plurality of first battery packs is greater than or equal to 40 V.

70. The electric all-terrain vehicle of claim 61, wherein a discharge voltage of the power supply assembly is greater than or equal to 100 V.

71. An electric all-terrain vehicle, comprising:
a vehicle frame;
a seat used for a user to sit on and mounted to the vehicle frame;
a trunk disposed behind the seat and used for carrying an item;
a traveling wheel set supporting the vehicle frame and comprising front wheels and rear wheels;
a suspension assembly dynamically connecting the vehicle frame to the traveling wheel set and used for absorbing shocks for the electric all-terrain vehicle;
a driving system for driving the traveling wheel set; and
a power supply assembly for supplying electric power to at least the driving system; wherein the power supply assembly comprises at least four battery packs, and a series-parallel combination relationship of the at least four battery packs is switchable.

72. The electric all-terrain vehicle of claim 71, wherein every two of the at least four battery packs are connected in series to form a plurality of series paths, and the plurality of series paths perform discharging in parallel.

73. The electric all-terrain vehicle of claim 72, wherein a discharge voltage of two battery packs connected in series among the at least four battery packs is greater than or equal to 80 V.

74. The electric all-terrain vehicle of claim 71, wherein the power supply assembly further comprises a plurality of switches, and the series-parallel combination relationship of the at least four battery packs depends on states of the plurality of switches.

75. The electric all-terrain vehicle of claim 74, wherein the power supply assembly further comprises an energy management system (EMS) configured to output control signals to control the plurality of switches.

76. The electric all-terrain vehicle of claim 74, wherein the plurality of switches are single pole, double throw switches.

77. The electric all-terrain vehicle of claim 76, wherein the plurality of switches are divided into different switch groups, and states of switches in each of the different switch groups are the same.

78. The electric all-terrain vehicle of claim 77, wherein an EMS controls the states of the plurality of switches according to a load of the electric all-terrain vehicle.

79. The electric all-terrain vehicle of claim 78, wherein a plurality of series paths are switched from parallel connection to series connection so that a discharge voltage of the power supply assembly is increased.

80. The electric all-terrain vehicle of claim 75, wherein the EMS switches the series-parallel combination relationship of the at least four battery packs according to voltage or state of charge (SoC) information of the at least four battery packs to minimize a sum of voltage differences or SoC differences between battery packs in a plurality of series paths.

81. An electric all-terrain vehicle, comprising:
a vehicle frame;
a seat used for a user to sit on and mounted to the vehicle frame;
a trunk disposed behind the seat and used for carrying an item;
a traveling wheel set supporting the vehicle frame and comprising front wheels and rear wheels;
a suspension assembly dynamically connecting the vehicle frame to the traveling wheel set and used for absorbing shocks for the electric all-terrain vehicle;
a driving system for driving the traveling wheel set; and
a power supply assembly for supplying electric power to at least the driving system;
wherein the power supply assembly comprises a plurality of battery packs, and a charging interface and a discharging interface of a battery pack of the plurality of battery packs are different interfaces.

82. The electric all-terrain vehicle of claim 81, wherein the battery pack comprises a charging positive electrode and a discharging positive electrode that are independent of each other.

83. The electric all-terrain vehicle of claim 82, wherein every two of the plurality of battery packs are discharged in series.

84. The electric all-terrain vehicle of claim 83, wherein two battery packs connected in series among the plurality of battery packs are connected via a pair of metal-oxide-semiconductor field-effect transistors, and the pair of metal-oxide-semiconductor field-effect transistors is turned on during charging and discharging, respectively.

85. The electric all-terrain vehicle of claim 83, wherein a discharge voltage of two battery packs connected in series among the plurality of battery packs is greater than or equal to 100 V.

86. The electric all-terrain vehicle of claim 83, further comprising an energy management system (EMS) configured to achieve state of charge (SoC) equalization or voltage equalization between the plurality of battery packs.

87. The electric all-terrain vehicle of claim 86, wherein two battery packs connected in series among the plurality of battery packs are connected to a direct current-direct current (DC-DC) converter.

88. The electric all-terrain vehicle of claim 86, wherein each of the plurality of battery packs is connected in parallel with a switch.

89. The electric all-terrain vehicle of claim 88, further comprising a power consuming device connected in series with the switch.

90. The electric all-terrain vehicle of claim 83, wherein a series-parallel relationship of the plurality of battery packs is switchable.

91. An electric all-terrain vehicle, comprising:
a vehicle frame;
a seat used for a user to sit on and mounted to the vehicle frame;
a trunk for carrying an item;
a traveling wheel set supporting the vehicle frame and comprising front wheels and rear wheels;
a suspension assembly dynamically connecting the vehicle frame to the traveling wheel set and used for absorbing shocks for the electric all-terrain vehicle; and
a driving system for driving the traveling wheel set;
wherein a battery pack interface is configured in the trunk, and when the battery pack interface is coupled to a battery pack, electrical energy is acquired from the battery pack to supply power to the driving system.

92. The electric all-terrain vehicle of claim 91, further comprising an energy storage device mounted to the vehicle frame and used for supplying power to the driving system.

93. The electric all-terrain vehicle of claim 92, wherein the trunk is disposed behind the seat, and the energy storage device is at least partially disposed below the seat.

94. The electric all-terrain vehicle of claim 91, wherein a plurality of battery pack interfaces are provided.

95. The electric all-terrain vehicle of claim 94, wherein at least two battery packs coupled to the plurality of battery pack interfaces are discharged in series.

96. The electric all-terrain vehicle of claim 91, wherein a rated voltage of the battery pack is greater than or equal to 40 V.

97. The electric all-terrain vehicle of claim 92, wherein the energy storage device and the battery pack are discharged in parallel, and a discharge voltage is greater than or equal to 80 V.

98. The electric all-terrain vehicle of claim 97, further comprising an on-board charger (OBC) configured to charge the energy storage device and the battery pack.

99. The electric all-terrain vehicle of claim 91, wherein the battery pack interface is disposed on an inner wall or at a bottom of the trunk.

100. The electric all-terrain vehicle of claim 91, wherein the battery pack interface is a semi-open battery pack accommodation cavity.
